(19) Europäisches Patentamt
European Patent Office
Office européen des brevets

(11) **EP 4 188 017 A1**

(12) **EUROPEAN PATENT APPLICATION**
published in accordance with Art. 153(4) EPC

(43) Date of publication:
**31.05.2023 Bulletin 2023/22**

(21) Application number: **21833439.9**

(22) Date of filing: **29.06.2021**

(51) International Patent Classification (IPC):
*H04W 72/12* (2023.01)    *H04W 28/06* (2009.01)
*H04W 76/15* (2018.01)    *H04L 27/26* (2006.01)
*H04W 84/12* (2009.01)

(52) Cooperative Patent Classification (CPC):
**H04L 27/26; H04W 28/06; H04W 72/12; H04W 76/15; H04W 84/12**

(86) International application number:
**PCT/KR2021/008213**

(87) International publication number:
**WO 2022/005180 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 KR 20200079676**

(71) Applicant: **Wilus Institute of Standards and Technology Inc.**
**Gyeonggi-do 13595 (KR)**

(72) Inventors:
• **KO, Geonjung**
  **Suwon-si Gyeonggi-do 16514 (KR)**
• **SON, Juhyung**
  **Hanam-si Gyeonggi-do 12997 (KR)**
• **KIM, Sanghyun**
  **Seoul 06788 (KR)**
• **KWAK, Jinsam**
  **Uiwang-si Gyeonggi-do 16014 (KR)**

(74) Representative: **Schmitt-Nilson Schraud Waibel Wohlfrom**
**Patentanwälte Partnerschaft mbB**
**Pelkovenstraße 143**
**80992 München (DE)**

(54) **METHOD AND WIRELESS COMMUNICATION TERMINAL FOR TRANSMITTING OR RECEIVING DATA IN WIRELESS COMMUNICATION SYSTEM**

(57)    Disclosed is a method for transmitting or receiving a physical layer protocol data unit (PPDU) in a wireless communication system. A terminal receives, from an access point (AP), a frame indicating, to one or more terminals, transmission of the PPDU. The frame comprises a common information field and a user information field for each of the one or more terminals, and at least one of the common information field and the user information field is used to identify whether the PPDU indicated by a trigger frame corresponds to an extremely high throughput (EHT) PPDU or a high efficiency (HE) PPDU. In response to the frame, the terminal transmits the PPDU.

FIG.24

**Description**

Technical Field

The present disclosure relates to a wireless communication system and, more particularly, to a wireless communication method and a wireless communication terminal for efficiently signaling of uplink (UL) multi user information in a wireless communication system.

Background Art

In recent years, with supply expansion of mobile apparatuses, a wireless LAN technology that can provide a rapid wireless Internet service to the mobile apparatuses has been significantly spotlighted. The wireless LAN technology allows mobile apparatuses including a smart phone, a smart pad, a laptop computer, a portable multimedia player, an embedded apparatus, and the like to wirelessly access the Internet in home or a company or a specific service providing area based on a wireless communication technology in a short range.

Institute of Electrical and Electronics Engineers (IEEE) 802.11 has commercialized or developed various technological standards since an initial wireless LAN technology is supported using frequencies of 2.4 GHz. First, the IEEE 802.1 1b supports a communication speed of a maximum of 11 Mbps while using frequencies of a 2.4 GHz band. IEEE 802.1 1a which is commercialized after the IEEE 802.1 1b uses frequencies of not the 2.4 GHz band but a 5 GHz band to reduce an influence by interference as compared with the frequencies of the 2.4 GHz band which are significantly congested and improves the communication speed up to a maximum of 54 Mbps by using an OFDM technology. However, the IEEE 802.11a has a disadvantage in that a communication distance is shorter than the IEEE 802.11b. In addition, IEEE 802.11g uses the frequencies of the 2.4 GHz band similarly to the IEEE 802.11b to implement the communication speed of a maximum of 54 Mbps and satisfies backward compatibility to significantly come into the spotlight and further, is superior to the IEEE 802.11a in terms of the communication distance.

Moreover, as a technology standard established to overcome a limitation of the communication speed which is pointed out as a weak point in a wireless LAN, IEEE 802.11n has been provided. The IEEE 802.11n aims at increasing the speed and reliability of a network and extending an operating distance of a wireless network. In more detail, the IEEE 802.11n supports a high throughput (HT) in which a data processing speed is a maximum of 540 Mbps or more and further, is based on a multiple inputs and multiple outputs (MIMO) technology in which multiple antennas are used at both sides of a transmitting unit and a receiving unit in order to minimize a transmission error and optimize a data speed. Further, the standard can use a coding scheme that transmits multiple copies which overlap with each other in order to increase data reliability.

As the supply of the wireless LAN is activated and further, applications using the wireless LAN are diversified, the need for new wireless LAN systems for supporting a higher throughput (very high throughput (VHT)) than the data processing speed supported by the IEEE 802.11n has come into the spotlight. Among them, IEEE 802.11ac supports a wide bandwidth (80 to 160 MHz) in the 5 GHz frequencies. The IEEE 802.11ac standard is defined only in the 5 GHz band, but initial 11ac chipsets will support even operations in the 2.4 GHz band for the backward compatibility with the existing 2.4 GHz band products. Theoretically, according to the standard, wireless LAN speeds of multiple stations are enabled up to a minimum of 1 Gbps and a maximum single link speed is enabled up to a minimum of 500 Mbps. This is achieved by extending concepts of a wireless interface accepted by 802.11n, such as a wider wireless frequency bandwidth (a maximum of 160 MHz), more MIMO spatial streams (a maximum of 8), multi-user MIMO, and high-density modulation (a maximum of 256 QAM). Further, as a scheme that transmits data by using a 60 GHz band instead of the existing 2.4 GHz/5 GHz, IEEE 802.11ad has been provided. The IEEE 802.11 ad is a transmission standard that provides a speed of a maximum of 7 Gbps by using a beamforming technology and is suitable for high bit rate moving picture streaming such as massive data or non-compression HD video. However, since it is difficult for the 60 GHz frequency band to pass through an obstacle, it is disadvantageous in that the 60 GHz frequency band can be used only among devices in a short-distance space.

As a wireless LAN standard after 802.11ac and 802.11ad, the IEEE 802.11ax (high efficiency WLAN, HEW) standard for providing a high-efficiency and high-performance wireless LAN communication technology in a high-density environment, in which APs and terminals are concentrated, is in the development completion stage. In an 802.11ax-based wireless LAN environment, communication with high frequency efficiency should be provided indoors/outdoors in the presence of high-density stations and access points (APs), and various technologies have been developed to implement the same.

In order to support new multimedia applications, such as high-definition video and real-time games, the development of a new wireless LAN standard has begun to increase a maximum transmission rate. In IEEE 802.11be (extremely high throughput, EHT), which is a 7th generation wireless LAN standard, development of standards is underway aiming at supporting a transmission rate of up to 30Gbps via a wider bandwidth, an increased spatial stream, multi-AP cooperation, and the like in a 2.4/5/6 GHz band.

Disclosure of Invention

Technical Problem

The present disclosure is to provide a super-high speed wireless LAN service for new multimedia applications, as described above.

In addition, the present disclosure is to provide a method and a device of determining a PPDU format, based on a frame indicating transmission of a physical layer protocol data unit (PPDU).

In addition, the present disclosure is to provide a method and a device of configuring a value of a length field included in a PPDU to have different values according to a format of the PPDU indicated by an access point (AP).

Technical tasks to be achieved in the specification are not limited to the technical tasks mentioned above, and other technical tasks that are not mentioned may be clearly understood by those skilled in the art on the basis of the following descriptions.

Solution to Problem

In a wireless communication system, a terminal for transmitting a trigger based physical layer protocol data unit (TB PPDU) which is a response frame on the basis of a trigger frame includes: a communication module; and a processor configured to control the communication module, wherein the processor is configured to receive a frame indicating transmission of a physical layer protocol data unit (PPDU) to one or more terminals from an access point (AP), wherein the frame includes a common information field and an user information field for each of the one or more terminals, at least one of the common information field and the user information field is used for identifying whether the PPDU indicated by the trigger frame is an extremely high throughput (EHT) PPDU or a high efficiency (HE) PPDU, the PPDU is transmitted in response to the frame, and the PPDU is the EHT PPDU or the HE PPDU identified by at least one among the common information field and the user information field.

In addition, in the present disclosure, the PPDU includes a length field related to a length of the PPDU, and the length field is configured to have different values according to whether the PPDU is the EHT PPDU or the HE PPDU.

In addition, in the present disclosure, when the PPDU is the HE PPDU, the length field is configured to have the same value as a value of the length field included in the frame.

In addition, in the present disclosure, when the PPDU is the EHT PPDU, the length field is configured to have a value of adding a specific value to the value of the length field included in the frame.

In addition, in the present disclosure, the specific value is 2.

In addition, in the present disclosure, when the value of the length field included in the frame is not a multiple of 3, the specific value is used so that the value of the length field of the PPDU is a multiple of 3.

In addition, in the present disclosure, the PPDU includes a PHY version identifier (ID) subfield indicating whether a PHY version of the PPDU is the EHT.

In addition, in the present disclosure, the frame further includes a format identifier subfield, and the PHY version ID subfield is configured to have the same value as the format identifier subfield.

In addition, in the present disclosure, the frame does not indicate transmission of the EHT PPDU and the HE PPDU, together.

In addition, in the present disclosure, the frame further includes a triggered response scheduling (TRS) control subfield (TRS control subfield), and the PPDU is determined as the EHT PPDU or the HE PPDU according to a format of the frame including the TRS control subfield.

In addition, in the present disclosure, the common information field includes a first subfield indicating a PPDU format transmitted from a primary channel, and the user information field includes a second subfield indicating a location of a resource unit (RU) allocated to the terminal.

In addition, in the present disclosure, whether the PPDU indicated through the frame is the EHT PPDU or the HE PPDU is identified based on the first subfield and the second subfield.

In addition, in the present disclosure, the first subfield indicate transmission of the EHT PPDU or the HE PPDU in the primary channel of a 160 MHz band, and the second subfield indicates whether the RU allocated by the user information field is located in the primary channel or the secondary channel.

In addition, the present disclosure provides a method includes the steps of receiving a frame indicating transmission of a physical layer protocol data unit (PPDU) to one or more terminals from an access point (AP), wherein the frame includes a common information field and an user information field for each of the one or more terminals, and at least one among the common information field and the user information field is used for identifying whether the PPDU indicated by the trigger frame is an extremely high throughput (EHT) PPDU or a high efficiency (HE) PPDU; and transmitting the PPDU in response to the frame, wherein the PPDU is the EHT PPDU or the HE PPDU identified by at least one among the common information field and the user information field.

Advantageous Effects of Invention

According to an embodiment of the present disclosure, there is an effect of efficiently signaling multi-link information.

In addition, according to an embodiment of the present disclosure, there is an effect of indicating transmission of a PPDU of each different format through one frame.

In addition, according to an embodiment of the present disclosure, there is an effect of indicating transmission of a legacy PPDU for backwards compatibility through one frame.

In addition, according to an embodiment of the present disclosure, in a competition-based channel access system, an entire resource utilization rate can be increased and a performance of a wireless LAN system can be improved.

The effects obtainable in the present invention are not limited to the above-mentioned effects, and other effects that are not mentioned may be clearly understood by those skilled in the art to which the present invention belongs, from descriptions below.

Brief Description of Drawings

FIG. 1 illustrates a wireless LAN system according to an embodiment of the present invention.

FIG. 2 illustrates a wireless LAN system according to another embodiment of the present invention.

FIG. 3 illustrates a configuration of a station according to an embodiment of the present invention.

FIG. 4 illustrates a configuration of an access point according to an embodiment of the present invention.

FIG. 5 schematically illustrates a process in which a STA and an AP set a link.

FIG. 6 illustrates a carrier sense multiple access (CSMA)/collision avoidance (CA) method used in wireless LAN communication.

FIG. 7 illustrates an example of a format of a PLCP Protocol data unit (PPDU) for each of various standard generations;

FIG. 8 illustrates an example of various extremely high throughput (EHT) physical protocol data unit (PPDU) formats and a method for indicating the same according to an embodiment of the present invention;

FIG. 9 is a view illustrating a multi-link device according to an embodiment of the present disclosure.

FIG. 10 illustrates a wireless LAN function according to an embodiment of the present disclosure.

FIG. 11 illustrates an uplink (UL) multi user (MU) operation according to an embodiment of the present disclosure.

FIG. 12 illustrates a trigger frame format according to an embodiment of the present disclosure.

FIG. 13 illustrates an UL MU operation according to another embodiment of the present disclosure.

FIG. 14 illustrates an UL MU operation according to another embodiment of the present disclosure.

FIG. 15 illustrates a method for indicating a trigger-based PPDU format according to an embodiment of the present disclosure.

FIG. 16 illustrates a trigger frame format for indicating a trigger-based PPDU format according to an embodiment of the present disclosure.

FIG. 17 illustrates a trigger frame format for indicating a trigger-based PPDU format according to another embodiment of the present disclosure.

FIG. 18 illustrates a determination method of a trigger frame format according to an embodiment of the present disclosure.

FIG. 19 illustrates a configuration method of a length field according to an embodiment of the present disclosure.

FIG. 20 illustrates an UL MU operation according to another embodiment of the present disclosure.

FIG. 21 illustrates an UL MU operation according to another embodiment of the present disclosure.

FIG. 22 illustrates an UL orthogonal frequency division multiple access (OFDMA)-based random access (UORA) operation according to an embodiment of the present disclosure.

FIG. 23 illustrates an UL MU operation according to another embodiment of the present disclosure.

FIG. 24 is a flowchart illustrating an example of a transmission method of a PPDU according to an embodiment of the present disclosure.

FIG. 25 is a flowchart illustrating an example of a transmission method of a frame for indicating transmission of a PPDU according to an embodiment of the present disclosure.

Best Mode for Carrying out the Invention

Terms used in the specification adopt general terms which are currently widely used by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

Throughout this specification and the claims that follow, when it is described that an element is "coupled" to another element, the element may be "directly coupled" to the other element or "electrically coupled" to the other element through a third element Further, unless explicitly described to the contrary, the word "comprise" and variations such as "comprises" or "comprising", will be understood to imply the inclusion of stated elements but not the exclusion of any other elements. Moreover, limitations such as "or more" or "or less" based on a specific threshold may be appropriately substituted with "more than" or "less than", respectively. Hereinafter, in the present invention, a field and a subfield may be interchangeably used.

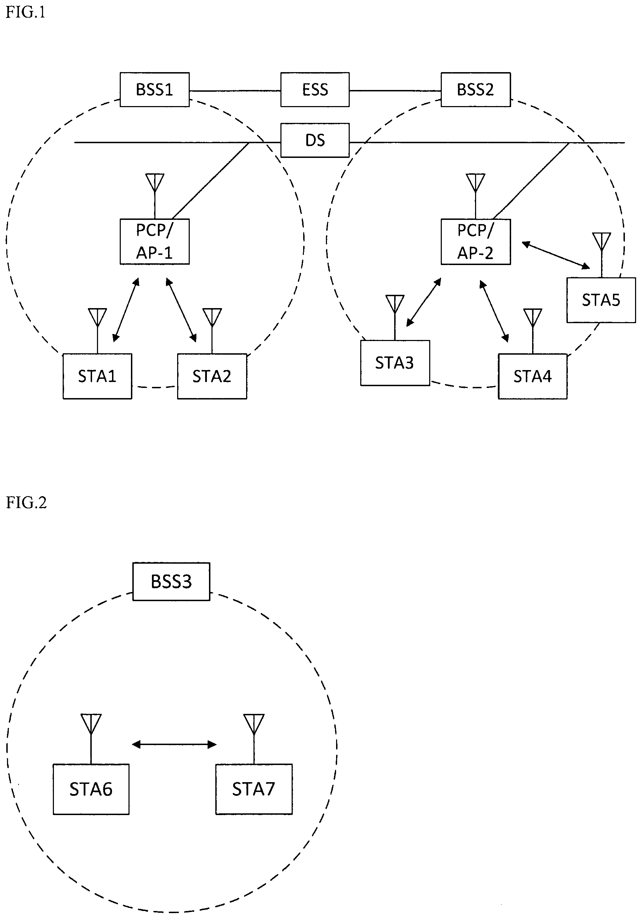

FIG. 1 illustrates a wireless LAN system according to an embodiment of the present invention.

FIG. 1 is a diagram illustrating a wireless LAN system according to an embodiment of the present invention. The wireless LAN system includes one or more basic service sets (BSS) and the BSS represents a set of apparatuses which are successfully synchronized with each other to communicate with each other. In general, the BSS may be classified into an infrastructure BSS and an independent BSS (IBSS) and FIG. 1 illustrates the infrastructure BSS between them.

As illustrated in FIG. 1, the infrastructure BSS (BSS1 and BSS2) includes one or more stations STA1, STA2, STA3, STA4, and STA5, access points AP-1 and AP-2 which are stations providing a distribution service, and a distribution system (DS) connecting the multiple access points AP-1 and AP-2.

The station (STA) is a predetermined device including medium access control (MAC) following a regulation of an IEEE 802.11 standard and a physical layer interface for a wireless medium, and includes both a non-access point (non-AP) station and an access point (AP) in a broad sense. Further, in the present specification, a term 'terminal' may be used to refer to a non-AP STA, or an AP, or to both terms. A station for wireless communication includes a processor and a communication unit and according to the embodiment, may further include a user interface unit and a display unit The processor may generate a frame to be transmitted through a wireless network or process a frame received through the wireless network and besides, perform various processing for controlling the station. In addition, the communication unit is functionally connected with the processor and transmits and receives frames through the wireless network for the station. According to the present invention, a terminal may be used as a term which includes user equipment (UE).

The access point (AP) is an entity that provides access to the distribution system (DS) via wireless medium for the station associated therewith. In the infrastructure BSS, communication among non-AP stations is, in principle, performed via the AP, but when a direct link is configured, direct communication is enabled even among the non-AP stations. Meanwhile, in the present invention, the AP is used as a concept including a personal BSS coordination point (PCP) and may include concepts including a centralized controller, a base station (BS), a node-B, a base transceiver system (BTS), and a site controller in a broad sense. In the present invention, an AP may also be referred to as a base wireless communication terminal. The base wireless communication terminal may be used as a term which includes an AP, a base station, an eNB (i.e. eNodeB) and a transmission point (TP) in a broad sense. In addition, the base wireless communication terminal may include various types of wireless communication terminals that allocate medium resources and perform scheduling in communication with a plurality of wireless communication terminals.

A plurality of infrastructure BSSs may be connected with each other through the distribution system (DS). In this case, a plurality of BSSs connected through the distribution system is referred to as an extended service set (ESS).

FIG. 2 illustrates an independent BSS which is a wireless LAN system according to another embodiment of the present invention. In the embodiment of FIG. 2, duplicative description of parts, which are the same as or correspond to the embodiment of FIG. 1, will be omitted.

Since a BSS3 illustrated in FIG. 2 is the independent BSS and does not include the AP, all stations STA6 and STA7 are not connected with the AP. The independent BSS is not permitted to access the distribution system and forms a self-contained network. In the independent BSS, the respective stations STA6 and STA7 may be directly connected with each other.

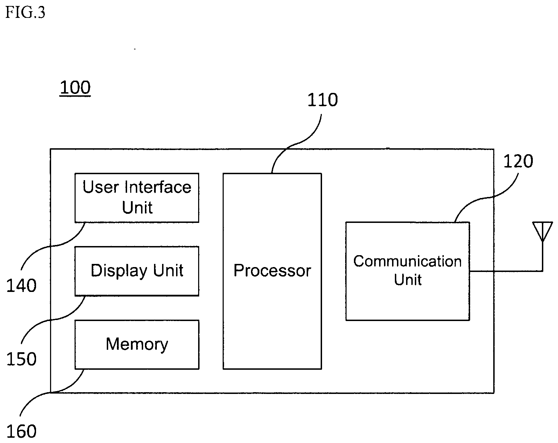

FIG. 3 is a block diagram illustrating a configuration of a station 100 according to an embodiment of the present invention. As illustrated in FIG. 3, the station 100 according to the embodiment of the present invention may include a processor 110, a communication unit 120, a user interface unit 140, a display unit 150, and a memory 160.

First, the communication unit 120 transmits and receives a wireless signal such as a wireless LAN packet, or the like and may be embedded in the station 100 or provided as an exterior. According to the embodiment, the communication unit 120 may include at least one communication module using different frequency bands. For example, the communication unit 120 may include communication modules having different frequency bands such as 2.4 GHz, 5 GHz, 6GHz and 60 GHz. According to an embodiment, the station 100 may include a communication module using a frequency band of 7.125 GHz or more and a communication module using a frequency band of 7.125 GHz or less. The respective communication modules may perform wireless communication with the AP or an external station according to a wireless LAN standard of a frequency band supported by the corresponding communication module. The communication unit 120 may operate only one communication module at a time or simultaneously operate multiple communication modules together according to the performance and requirements of the station 100. When the station 100 includes a plurality of communication modules, each communication module may be implemented by independent elements or a plurality of modules may be integrated into one chip. In an embodiment of the present invention, the communication unit 120 may represent a radio frequency (RF) communication module for processing an RF signal.

Next, the user interface unit 140 includes various types of input/output means provided in the station 100. That is, the user interface unit 140 may receive a user input by using various input means and the processor 110 may control the station 100 based on the received user input. Further, the user interface unit 140 may perform output based on a command of the processor 110 by using various output means.

Next, the display unit 150 outputs an image on a display screen. The display unit 150 may output various display objects such as contents executed by the processor 110 or a user interface based on a control command of the processor 110, and the like. Further, the memory 160 stores a control program used in the station 100 and various resulting data. The control program may include an access program required for the station 100 to access the AP or the external station.

The processor 110 of the present invention may execute various commands or programs and process data in the station 100. Further, the processor 110 may control the respective units of the station 100 and control data transmission/reception among the units. According to the embodiment of the present invention, the processor 110 may execute the program for accessing the AP stored in the memory 160 and receive a communication configuration message transmitted by the AP. Further, the processor 110 may read information on a priority condition of the station 100 included in the communication configuration message and request the access to the AP based on the information on the priority condition of the station 100. The processor 110 of the present invention may represent a main control unit of the station 100 and according to the embodiment, the processor 110 may represent a control unit for individually controlling some component of the station 100, for example, the communication unit 120, and the like. That is, the processor 110 may be a modem or a modulator/demodulator for modulating and demodulating wireless signals transmitted to and received from the communication unit 120. The processor 110 controls various operations of wireless signal transmission/reception of the station 100 according to the embodiment of the present invention. A detailed embodiment thereof will be described below.

The station 100 illustrated in FIG. 3 is a block diagram according to an embodiment of the present invention, where separate blocks are illustrated as logically distinguished elements of the device. Accordingly, the elements of the device may be mounted in a single chip or multiple chips depending on design of the device. For example, the processor 110 and the communication unit 120 may be implemented while being integrated into a single chip or implemented as a separate chip. Further, in the embodiment of the present invention, some components of the station 100, for example, the user interface unit 140 and the display unit 150 may be optionally provided in the station 100.

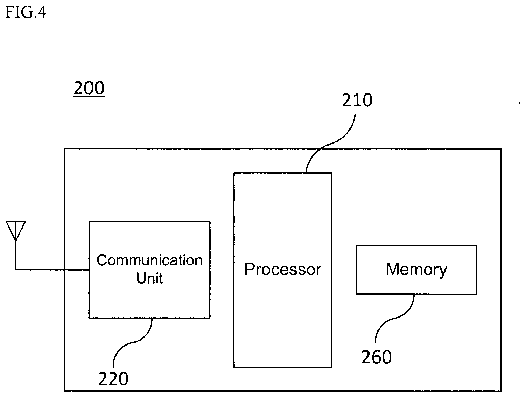

FIG. 4 is a block diagram illustrating a configuration of an AP 200 according to an embodiment of the present invention. As illustrated in FIG. 4, the AP 200 according to the embodiment of the present invention may include a processor 210, a communication unit 220, and a memory 260. In FIG. 4, among the components of the AP 200, duplicative description of parts which are the same as or correspond to the components of the station 100 of FIG. 2 will be omitted.

Referring to FIG. 4, the AP 200 according to the present invention includes the communication unit 220 for operating the BSS in at least one frequency band. As described in the embodiment of FIG. 3, the communication unit 220 of the AP 200 may also include a plurality of communication modules using different frequency bands. That is, the AP 200 according to the embodiment of the present invention may include two or more communication modules among different frequency bands, for example, 2.4 GHz, 5 GHz, 6GHz and 60 GHz together. Preferably, the AP 200 may include a communication module using a frequency band of 7.125GHz or more and a communication module using a frequency band of 7.125 GHz or less. The respective communication modules may perform wireless communication with the station according to a wireless LAN standard of a frequency band supported by the corresponding communication module. The communication unit 220 may operate only one communication module at a time or simultaneously operate multiple communication modules together according to the performance and requirements of the AP 200. In an embodiment of the present invention, the communication unit 220 may represent a radio frequency (RF) communication module for processing an RF signal.

Next, the memory 260 stores a control program used in the AP 200 and various resulting data. The control program may include an access program for managing the access of the station. Further, the processor 210 may control the respective units of the AP 200 and control data transmission/reception among the units. According to the embodiment of the present invention, the processor 210 may execute the program for accessing the station stored in the memory 260 and transmit communication configuration messages for one or more stations. In this case, the communication configuration messages may include information about access priority conditions of the respective stations. Further, the processor 210 performs an access configuration according to an access request of the station. According to an embodiment, the processor 210 may be a modem or a modulator/demodulator for modulating and demodulating wireless signals transmitted to and received from the communication unit 220. The processor 210 controls various operations such as wireless signal transmission/reception of the AP 200 according to the embodiment of the present invention. A detailed embodiment thereof will be described below.

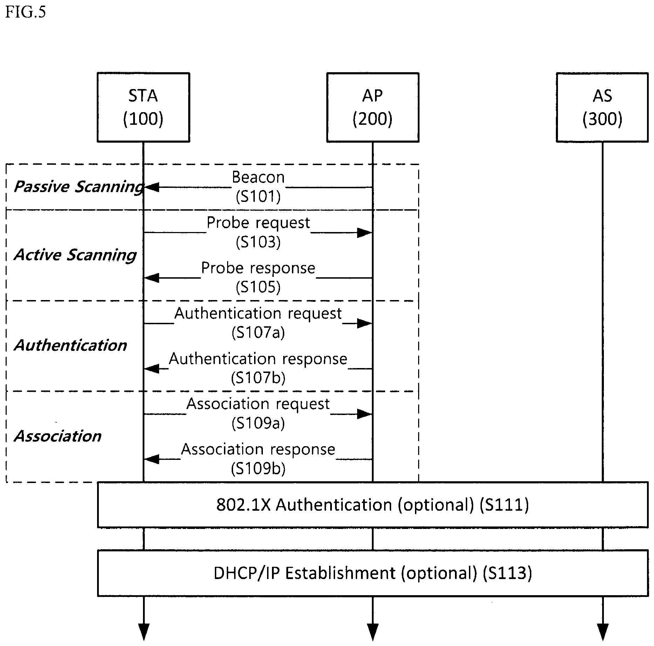

FIG. 5 is a diagram schematically illustrating a process in which a STA sets a link with an AP.

Referring to FIG. 5, the link between the STA 100 and the AP 200 is set through three steps of scanning, authentication, and association in a broad way. First, the scanning step is a step in which the STA 100 obtains access information of BSS operated by the AP 200. A method for performing the scanning includes a passive scanning method in which the AP 200 obtains information by using a beacon message (S101) which is periodically transmitted and an active scanning method in which the STA 100 transmits a probe request to the AP (S103) and obtains access information by receiving a probe response from the AP (S105).

The STA 100 that successfully receives wireless access information in the scanning step performs the authentication step by transmitting an authentication request (S107a) and receiving an authentication response from the AP 200 (S107b). After the authentication step is performed, the STA 100 performs the association step by transmitting an association request (S109a) and receiving an association response from the AP 200 (S109b). In this specification, an association basically means a wireless association, but the present invention is not limited thereto, and the association may include both the wireless association and a wired association in a broad sense.

Meanwhile, an 802.1Xbased authentication step (S111) and an IP address obtaining step (S113) through DHCP may be additionally performed. In FIG. 5, the authentication server 300 is a server that processes 802.1X based authentication with the STA 100 and may be present in physical association with the AP 200 or present as a separate server.

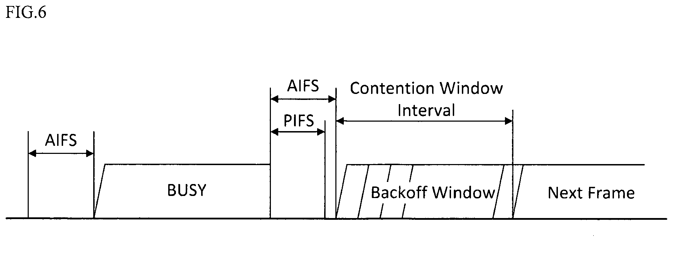

FIG. 6 is a diagram illustrating a carrier sense multiple access (CSMA)/collision avoidance (CA) method used in wireless LAN communication.

A terminal that performs a wireless LAN communication checks whether a channel is busy by performing carrier sensing before transmitting data. When a wireless signal having a predetermined strength or more is sensed, it is determined that the corresponding channel is busy and the terminal delays the access to the corresponding channel. Such a process is referred to as clear channel assessment (CCA) and a level to decide whether the corresponding signal is sensed is referred to as a CCA threshold. When a wireless signal having the CCA threshold or more, which is received by the terminal, indicates the corresponding terminal as a receiver, the terminal processes the received wireless signal. Meanwhile, when a wireless signal is not sensed in the corresponding channel or a wireless signal having a strength smaller than the CCA threshold is sensed, it is determined that the channel is idle.

When it is determined that the channel is idle, each terminal having data to be transmitted performs a backoff procedure after an inter frame space (IFS) time depending on a situation of each terminal, for instance, an arbitration IFS (AIFS), a PCF IFS (PIFS), or the like elapses. According to the embodiment, the AIFS may be used as a component which substitutes for the existing DCF IFS (DIFS). Each terminal stands by while decreasing slot time(s) as long as a random number determined by the corresponding terminal during an interval of an idle state of the channel and a terminal that completely exhausts the slot time(s) attempts to access the corresponding channel. As such, an interval in which each terminal performs the backoff procedure is referred to as a contention window interval.

When a specific terminal successfully accesses the channel, the corresponding terminal may transmit data through the channel. However, when the terminal which attempts the access collides with another terminal, the terminals which collide with each other are assigned with new random numbers, respectively to perform the backoff procedure again. According to an embodiment, a random number newly assigned to each terminal may be decided within a range (2*CW) which is twice larger than a range (a contention window, CW) of a random number which the corresponding terminal is previously assigned. Meanwhile, each terminal attempts the access by performing the backoff procedure again in a next contention window interval and in this case, each terminal performs the backoff procedure from slot time(s) which remained in the previous contention window interval. By such a method, the respective terminals that perform the wireless LAN communication may avoid a mutual collision for a specific channel.

Hereinafter, a terminal of the present disclosure is referred to as a non-AP STA, an AP STA, an AP, a STA, a receiving device or a transmitting device, but the present disclosure is not limited thereto. In addition, the AP STA of the present disclosure may be referred to as the AP.

<Examples of various PPDU formats>

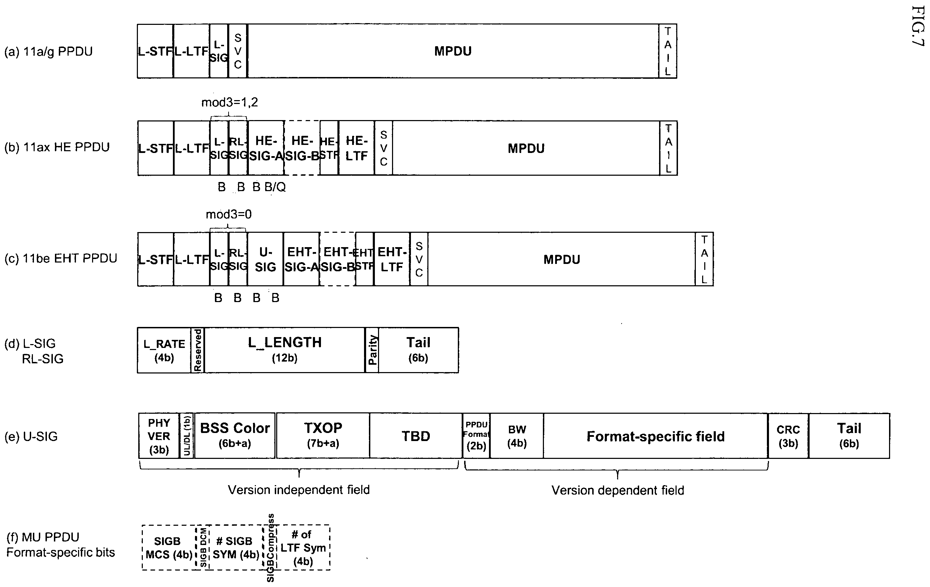

FIG. 7 illustrates an example of a format of a PLCP Protocol data unit (PPDU) for each of various standard generations. More specifically, FIG. 7(a) illustrates an embodiment of a legacy PPDU format based on 802.11a/g, FIG. 7(b) illustrates an embodiment of an HE PPDU format based on 802.11ax, and FIG. 7(c) illustrates an embodiment of a non-legacy PPDU (i.e., EHT PPDU) format based on 802.11be. FIG. 7(d) illustrates detailed field configurations of RL-SIG and L-SIG commonly used in the PPDU formats.

Referring to FIG. 7(a), a preamble of the legacy PPDU includes a legacy short training field (L-STF), a legacy long training field (L-LTF), and a legacy signal field (L-SIG). In an embodiment of the present invention, the L-STF, the L-LTF, and the L-SIG may be referred to as a legacy preamble.

Referring to FIG. 7(b), a preamble of the HE PPDU additionally includes, in the legacy preamble, a repeated legacy short training field (RL-SIG), a high efficiency signal A field (HE-SIG-A), a high efficiency signal B field (HE-SIG-B), a high efficiency short training field (HE-STF), and a high efficiency long training field (HE-LTF). In an embodiment of the present invention, the RL-SIG, HE-SIG-A, the HE-SIG-B, the HE-STF and the HE-LTF may be referred to as an HE preamble. A specific configuration of the HE preamble may be modified according to an HE PPDU format. For example, HE-SIG-B may be used only in an HE MU PPDU format.

Referring to FIG. 7(c), a preamble of the EHT PPDU additionally includes, in the legacy preamble, a repeated legacy short training field (RL-SIG), a universal signal field (U-SIG), and an extremely high throughput signal A field (EHT-SIG-A), an extremely high throughput signal B field (EHT-SIG-B), an extremely high throughput short training field (EHT-STF), and an extremely high throughput long training field (EHT-LTF). In an embodiment of the present invention, the RL-SIG, EHT-SIG-A, the EHT-SIG-B, the EHT-STF and the EHT-LTF may be referred to as an EHT preamble. A specific configuration of a non-legacy preamble may be modified according to an EHT PPDU format. For example, EHT-SIG-A and EHT-SIG-B may be used only in a part of the EHT PPDU format.

64-FFT OFDM is applied in an L-SIG field included in the preamble of the PPDU, and the L-SIG field includes a total of 64 subcarriers. Among 64 subcarriers, 48 subcarriers excluding a guard subcarrier, a DC subcarrier, and a pilot subcarrier are used for transmission of L-SIG data. BPSK and a modulation and coding scheme (MCS) of rate=1/2 are applied in L-SIG, and therefore the L-SIG may include a total of 24 bits of information. FIG. 7(d) illustrates a 24-bit information configuration of L-SIG.

Referring to FIG. 7(d), the L-SIG includes an L_RATE field and an L_LENGTH field. The L_RATE field includes 4 bits and indicates an MCS used for data transmission. Specifically, the L_RATE field indicates one value among transmission rates of 6/9/12/18/24/36/48/54Mbps obtained by combining a modulation scheme of BPSK/QPSK/16-QAM/64-QAM, etc. and an inefficiency of 1/2,2/3,3/4, etc. A total length of a corresponding PPDU may be indicated by combining information of the L_RATE field and information of the L_LENGTH field. In a non-legacy PPDU format, the L_RATE field is configured to a minimum rate of 6Mbps.

A unit of the L_LENGTH field is a byte and a total of 12 bits are allocated to signal up to 4095, and a length of the PPDU may be indicated in combination with the L_RATE field. A legacy terminal and a non-legacy terminal may interpret the L_LENGTH field in different ways.

Firstly, a method of interpreting the length of the PPDU by the legacy terminal and the non-legacy terminal by using the L_LENGTH field is described below. When a value of the L_RATE field is configured to indicate 6 Mbps, 3 bytes during 4 us which is one symbol duration of 64 FET (i.e., 24 bits) may be transmitted. Therefore, the 64 FET standard symbol number after an L-SIG is acquired by adding 3 bytes corresponding to a SVC field and a Tail field to the L_LENGTH field value and then dividing the same by 3 bytes which is a transmission amount of one symbol. When multiplying the acquired symbol number by 4 us which is one symbol duration and then adding 20 us which is consumed to transmit the L-STF, the L-LTF, and the L-SIG, the length of a corresponding PPDU, i.e., a receipt time (RXTIME) is acquired, which is expressed by Equation 1 below.

【Equation 1】

$$\text{RXTIME(us)} = \left( \left\lceil \frac{\text{L\_LENGTH}+3}{3} \right\rceil \right) \times 4 + 20$$

In this case, $\lceil x \rceil$ denotes the smallest natural number greater than or equal to x. Since the maximum value of the L_LENGTH field is 4095, the length of the PPDU can be set up to 5.464ms. The non-legacy terminal transmitting the PPDU should set the L_LENGTH field as shown in Equation 2 below.

【Equation 2】

$$\text{L\_LENGTH(byte)} = \left( \left\lceil \frac{\text{TXTIME}-20}{4} \right\rceil \right) \times 3 - 3$$

Herein, TXTIME is the total transmission time constituting the corresponding PPDU, and is expressed by Equation 3 below. In this case, TX represents the transmission time of X.

【Equation 3】

$$TXTIME(us) = T_{L-STF} + T_{L-LTF} + T_{L-SIG} + T_{RL-SIG} + T_{U-SIG} + (T_{EHT-SIG-A}) + (T_{EHT-SIG-B})$$

$$+ T_{EHT-STF} + N_{EHT-LTF} \cdot T_{EHT-LTF} + T_{DATA}$$

Referring to the above equations, the length of the PPDU is calculated based on a rounded up value of L_LENGTH/3. Therefore, for a random value of k, three different values of L_LENGTH={3k+1, 3k+2, 3(k+1)} indicate the same PPDU length.

Referring to FIG. 7(e), a universal SIG (U-SIG) field continues to exist in an EHT PPDU and a WLAN PPDU of a subsequent generation, and serves to classify a generation of a PPDU, which includes 11be. U-SIG is a 64 FFT-based OFDM 2 symbol and may transfer a total of 52 bits of information. In 52 bits, 43 bits excluding 9 bits for CRC/Tail are largely divided into a version independent (VI) field and a version dependent (VD) field.

A VI bit enables a current bit configuration to be maintained even later on, so that even if a PPDU of a subsequent generation is defined, current 11be terminals may obtain information on the PPDU via the VI fields of the PPDU. To this end, the VI field includes PHY version, ULDL, BSS color, TXOP, and reserved fields. The PHY version field is 3 bits, and serves to sequentially classify 11be and subsequent generation wireless LAN standards into versions. 11be has a value of 000b. The LTLIDL field identifies whether the PPDU is an uplink/downlink PPDU. BSS color indicates an identifier for each BSS defined in 11ax, and has a value of 6 bits or more. TXOP indicates transmit opportunity duration transmitted in a MAC header, wherein, by adding the TXOP to a PHY header, the PPDU may infer a length of the TXOP included therein without having to decode an MPDU, and the TXOP has a value of 7 bits or more.

The VD field is signaling information useful only for an 11be version of the PPDU, and may include a field commonly used in any PPDU format, such as PPDU format and BW, and a field defined differently for each PPDU format. The PPDU format is a classifier that classifies EHT single user (SU), EHT multiple user (MU), EHT trigger-based (TB), EHT extended range (ER) PPDU, etc. The BW field signals five basic PPDU BW options (BW, which is expressible in the form of an exponential power of 20*2, may be referred to as basic BW) of 20, 40, 80,160 (80+80), and 320 (160+160) MHz and various remaining PPDU BWs configured via preamble puncturing. After being signaled at 320 MHz, signaling may be performed in a form in which some 80 MHz is punctured. A punctured and modified channel type may be signaled directly in the BW field, or may be signaled using the BW field with a field (e.g., a field within the EHT-SIG field) appearing after the BW field. If the BW field is configured to 3 bits, a total of 8 BW signaling may be performed, and therefore only up to 3 signaling may be performed in a puncturing mode. If the BW field is configured to 4 bits, a total of 16 BW signaling may be performed, and therefore up to 11 signaling may be performed in the puncturing mode.

A field located after the BW field varies depending on the type and format of the PPDU, an MU PPDU and an SU PPDU may be signaled in the same PPDU format, a field for classification between the MU PPDU and the SU PPDU may be located before an EHT-SIG field, and additional signaling may be performed for the same. Both the SU PPDU and the MU PPDU include the EHT-SIG field, but some fields that are not required in the SU PPDU may be compressed. Information on the field to which the compression has been applied may be omitted or may have a size smaller than a size of an original field included in the MU PPDU. For example, in a case of the SU PPDU, a common field of the EHT-SIG may be omitted or replaced, or the SU PPDU may have a different configuration in which a user specific field is replaced, reduced to one, or the like.

Alternatively, the SU PPDU may further include a compression field indicating whether compression is performed, and a part of field (e.g., RA fields, etc.) may be omitted according to a value of the compressed field.

If a part of the EHT-SIG field of the SU PPDU is compressed, information to be included in the compressed field may be signaled also in an uncompressed field (e.g., the common field, etc.). The MU PPDU corresponds to a PPDU format for concurrent reception by multiple users, and therefore the EHT-SIG field is required to be transmitted subsequently to the U-SIG field, and the amount of signaled information may vary. That is, a plurality of MU PPDUs are transmitted to a plurality of STAs, so that the respective STAs should recognize locations of RUs, at which the MU PPDUs are transmitted, the STAs to which the RUs have been allocated respectively, and whether the transmitted MU PPDUs have been transmitted to the STAs themselves. Therefore, an AP should transmit information described above, by including the same in the EHT-SIG field. To this end, information for efficient transmission of the EHT-SIG field is signaled in the U-SIG field, and this may correspond to an MCS that is a modulation method and/or the number of symbols in the EHT-SIG field. The EHT-SIG field may include information on a size and location of an RU allocated to each user.

In the case of the SU PPDU, a plurality of RUs may be allocated to an STA, and the plurality of RUs may be continuous or discontinuous. If the RUs allocated to the STA are discontinuous, the STA should recognize a punctured RU in the middle in order to efficiently receive the SU PPDU. Accordingly, the AP may transmit the SU PPDU including information (e.g., a puncturing pattern of the RUs, etc.) of punctured RUs among the RUs allocated to the STA. That is, in the case of the SU PPDU, a puncturing mode field, which includes information indicating in a bitmap format, etc., a puncturing pattern and whether the puncturing mode is applied, may be included in the EHT-SIG field, and the puncturing mode field may signal a discontinuous channel type appearing within a bandwidth.

The signaled discontinuous channel type is limited, and indicates discontinuous channel information and BW of the SU PPDU in combination with a value of the BW field. For example, the SU PPDU is a PPDU transmitted only to a single terminal, so that the STA may recognize a bandwidth allocated to itself via the BW field included in the PPDU, and the SU PPDU may recognize a punctured resource in the allocated bandwidth via the puncturing mode field of the EHT-SIG field or the U-SIG field included in the PPDU. In this case, the terminal may receive the PPDU in resource units remaining after excluding a specific channel of the punctured resource unit. The plurality of RUs allocated to the STA may be configured by different frequency bands or tones.

Only a limited discontinuous channel type is signaled in order to reduce signaling overhead of the SU PPDU. Puncturing may be performed for each 20 MHz sub-channel, so that if puncturing is performed for BW having a large number of 20 MHz sub-channels, such as 80, 160, and 320 MHz, a discontinuous channel (if puncturing of only edge 20 MHz is considered to be discontinuous) type should be signaled in the case of 320 MHz by expressing whether each of 15 20 MHz sub-channels remaining after excluding a primary channel is used. As such, allocating 15 bits to signal a discontinuous channel type of single user transmission may act as excessively large signaling overhead in consideration of a low transmission rate of a signaling part.

The present disclosure suggests a signaling technique of a discontinuous channel type of the SU PPDU and illustrates the discontinuous channel type determined according to the suggested technique. In addition, the present disclosure suggests a signaling technique of a puncturing type of each of a primary 160 MHz and a secondary 160 MHz in 320 MHz BW configuration of the SU PPDU.

In addition, an embodiment of the present disclosure suggests a technique which differs in the configuration of the PPDU indicating the preamble puncturing BW values according to the PPDU format signaled in the PPDU format field. If the length of the BW field is 4 bits, in case of the EHT SU PPDU or the TB PPDU, the EHT-SIG-A of 1 symbol may be additionally signaled after the U-SIG, or the EHT-SIG-A may be never signaled, so that by considering this, it is necessary to completely signal a maximum of 11 puncturing modes through only the BW field of the U-SIG. However, in case of the EHT MU PPDU, since the EHT-SIG-B is additionally signaled after the U-SIG, the maximum of 11 puncturing modes may be signaled by a method different from the SU PPDU. In case of the EHT ER PPDU, the BW field is configured as 1 bit to signal information on whether the PPDU uses 20 MHz or 10 MHz band.

FIG. 7(f) illustrates a configuration of a format-specific field of a VD field when the EHT MU PPDU is indicated in the PPDU format field of U-SIG. In the case of the MU PPDU, SIG-B, which is a signaling field for concurrent reception by multiple users, is essentially required, and SIG-B may be transmitted without separate SIG-A after U-SIG. To this end, information for decoding of SIG-B should be signaled in U-SIG. These fields include SIG-B MCS, SIG-B DCM, Number of SIG-B Symbols, SIG-B Compression, and Number of EHT-LTF Symbols.

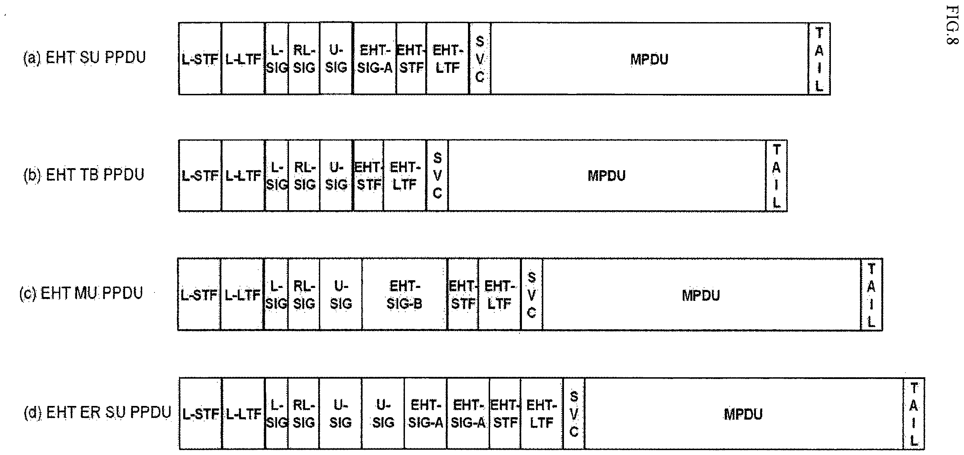

FIG. 8 illustrates an example of various extremely high throughput (EHT) physical protocol data unit (PPDU) formats and a method for indicating the same according to an embodiment of the present invention.

Referring to FIG. 8, a PPDU may include a preamble and a data part, and an EHT PPDU format, that is a PPDU type, may be classified according to a U-SIG field included in the preamble. Specifically, based on a PPDU format field included in the U-SIG field, whether the format of the PPDU is an EHT PPDU may be indicated.

FIG. 8(a) shows an example of an EHT SU PPDU format for a single STA. An EHT SU PPDU is a PPDU used for single user (SU) transmission between an AP and a single STA, and an EHT-SIG-A field for additional signaling may be located after the U-SIG field.

FIG. 8(b) shows an example of an EHT trigger-based PPDU format which corresponds to an EHT PPDU transmitted based on a trigger frame. An EHT Trigger-based PPDU is an EHT PPDU transmitted based on a trigger frame and is an uplink PPDU used for a response to the trigger frame. Unlike in the EHT SU PPDU, an EHT-SIG-A field is not located after a U-SIG field in the EHT PPDU.

FIG. 8(c) shows an example of an EHT MU PPDU format which corresponds to an EHT PPDU for multiple users. An EHT MU PPDU is a PPDU used to transmit the PPDU to one or more STAs. In the EHT MU PPDU format, an HE-SIG-B field may be located after a U-SIG field.

FIG. 8(d) shows an example of an EHT ER SU PPDU format used for single user transmission with an STA in an extended range. An EHT ER SU PPDU may be used for single user transmission with an STA of a wider range compared to the EHT SU PPDU described in FIG. 8(a), and a U-SIG field may be repeatedly located on a time axis.

The EHT MU PPDU described in FIG. 8(c) may be used by an AP to perform downlink transmission to a plurality of STAs. Here, the EHT MU PPDU may include scheduling information so that the plurality of STAs may concurrently receive the PPDU transmitted from the AP. The EHT MU PPDU may transfer, to the STAs, AID information of a transmitter and/or a receiver of the PPDU transmitted via a user specific field of EHT-SIG-B. Accordingly, the plurality of terminals having received the EHT MU PPDU may perform a spatial reuse operation based on the AID information of the user specific field included in a preamble of the received PPDU.

Specifically, a resource unit allocation (RA) field of the HE-SIG-B field included in the HE MU PPDU may include information on a configuration of a resource unit (e.g., a division form of the resource unit) in a specific bandwidth (e.g., 20 MHz, etc.) of a frequency axis. That is, the RA field may indicate configurations of resource units segmented in a bandwidth for transmission of the HE MU PPDU, in order for the STA to receive the PPDU. Information on the STA allocated (or designated) to each segmented resource unit may be included in the user specific field of EHT-SIG-B so as to be transmitted to the STA. That is, the user specific field may include one or more user fields corresponding to the respective segmented resource units.

For example, a user field corresponding to at least one resource unit used for data transmission among the plurality of segmented resource units may include an AID of a receiver or a transmitter, and a user field corresponding to the remaining resource unit(s) which is not used for data transmission may include a preconfigured null STA ID.

Two or more PPDUs illustrated in FIG. 8 may be indicated by a value indicating the same PPDU format. That is, two or more PPDUs may be indicated by the same PPDU format through the same value. For example, the EHT SU PPDU and the EHT MU PPDU may be indicated by the same value through the U-SIG PPDU format subfield. At this time, the EHT SU PPDU and the EHT MU PPDU may be divided by the number of the STAs receiving the PPDU. For example, the PPDU receiving one STA may be identified as the EHT SU PPDU, and when the number of the STAs is configured to receive two or more STAs, the PPDU may be identified as the EHT MU PPDU. In other words, two or more PPDU formats illustrated in FIG. 8 may be indicated through the same subfield value.

In addition, a part field among the fields illustrated in FIG. 8 or part information of the field may be omitted, and the case that the part field or the part information of the field is omitted may be defined as a compression mode or a compressed mode.

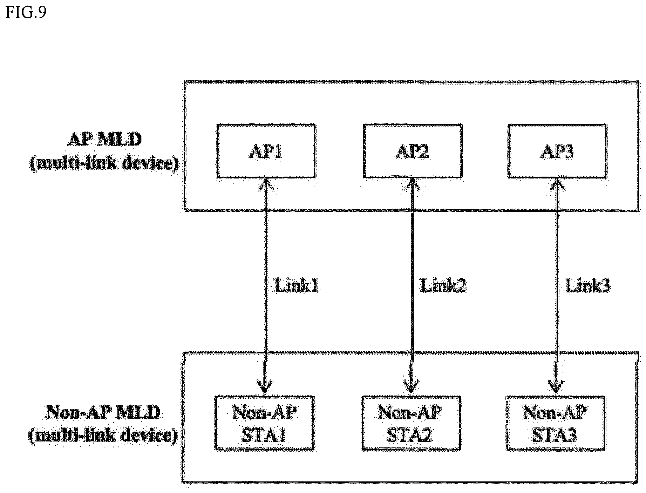

FIG. 9 is a view illustrating a multi-link device according to an embodiment of the present disclosure.

Referring to FIG. 9, a concept of a device to which one or more STAs are affiliated may be defined. According to an embodiment of the present disclosure, the devices to which more than one STA (i.e., two or more) are affiliated may be defined. At this time, the device may be a logical concept. Therefore, the devices to which one or more STAs or more than one STA having such a concept are affiliated may be referred to as a multi-link device (MLD), a multi-band device, or a multi-link logical entity (MLLE).

Otherwise, the devices of the concept may be referred to as a multi-link entity (MLE). In addition, the MLD may have one medium access control service access point (MAC SAP) until a logical link control (LLC), and the MLD may have one MAC data service.

It is possible that the STAs included in the MLD operate in one or more links or channels. That is, it is possible that the STAs included in the MLD operate in multiple channels which are different from each other. For example, it is possible that the STAs included in the MLD operate by using the channels of the different frequency bands of 2.4 GHz, 5 GHz, and 6 GHz. Accordingly, it is possible that the MLD obtains a benefit from the channel access, and increases the performance of the entire network. A conventional wireless LAN operates by the single link, but the MLD operation may obtain much more channel access opportunities by using the plurality of links or the STA may efficiently operate in the plurality of links in consideration of a situation of the channel.

In addition, in case that the STAs affiliated to the MLD are the APs, the MLD to which the APs are affiliated may be the AP MLD. However, in case that the STAs affiliated to the MLD are the non-AP STA, the MLDs to which the non-APs are affiliated may be the non-AP MLD.

Referring to FIG. 9, the MLD including the multiple STAs may exist, and the multiple STAs included in the MLD may operate in the multiple links. In FIG. 9, the MLD including an AP1, an AP2, and an AP3 which are the AP may be referred to as an AP MLD, and the MLD including a non-AP STA1, a non-AP STA2, and a non-AP STA3 which are the non-AP STA may be referred to as a non-AP MLD. The STAs included in the MLD may operate in a link 1, a link 2, a link 3, or a partial link of the link 1 to the link 3.

According to an embodiment of the present disclosure, a multi-link operation may include a multi-link configuration (multi-link setup) operation. The multi-link configuration may be an operation corresponding to association performed in a single link operation. In order to exchange the frame in the multi-link, the multi-link configuration may be performed in advance. The multi-link configuration may be performed by using a multi-link configuration element. The multi-link configuration element may include capability information related to the multi-link, and the capability information may include information regarding whether it is possible that the other STA included in the MLD transmits the frame to the other link while the STA included in the MLD receives the frame through one link. That is, the capability information may include information regarding whether the STAs (non-AP STA and/or AP (or AP STA)) transmit/receive the frames in different transmission directions at the same time, through the links included in the MLD. In addition, the capability information may further include information regarding a usable link or operating channel. The multi-link configuration may be configured through a negotiation between peer STAs, and the multi-link operation may be configured through one link.

According to an embodiment of the present disclosure, a mapping relationship between the links of the TID and the MLD may exist. For example, when the TID and the link are mapped, the TID may be transmitted through the mapped link. A mapping between the TID and the link may be performed through a transmission direction base (directional-based). For example, the mapping may be performed for each of both directions between the MLD1 and the MLD2. In addition, a default configuration may exist in the mapping between the TID and the link. For example, the mapping between the TID and link may be mapping all TIDs in any link, fundamentally.

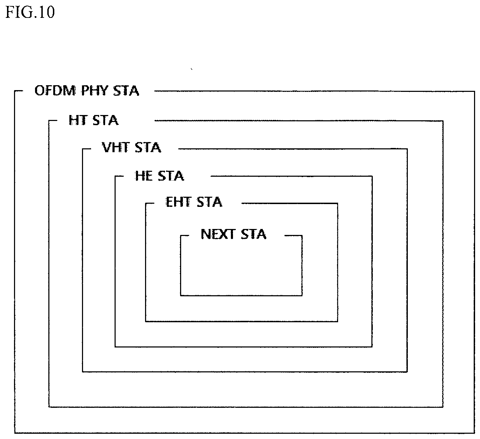

FIG. 10 illustrates a wireless LAN function according to an embodiment of the present disclosure.

Referring to FIG. 10, the wireless LAN of any standard may include a function of the wireless LAN of the other standard. In addition, the wireless LAN of any standard may be the wireless LAN of the other standard. Herein, the wireless LAN may mean the STA. In addition, the wireless LAN may mean the MLD including the STA. For example, a wireless LAN standard may include a previous generation standard function and include an additional function. For example, the HT STA may be the OFDM PHY STA. In addition, the HT STA may perform an additional function as well as the function of the OFDM PHY STA. For example, the VHT STA may be the HT STA. In addition, the VHT STA may perform the additional function as well as the function of the HT STA. For example, the HE STA may be the VHT STA. In addition, the HE STA may perform an additional function as well as the function of the VHT STA. In addition, the EHT STA may be the HE STA. In addition, the EHT STA may perform an additional function as well as the function of the HE STA. In addition, the standards after the EHT standard may exist In the present disclosure, a standard after the EHT standard may be referred to as a NEXT standard, and the STA according to the NEXT standard may be referred to as the NEXT STA. The NEXT STA may be the EHT STA. In addition, the NEXT STA may perform an additional function as well as the function of the EHT STA.

FIG. 10 is a diagram illustrating a relationship between the STAs of each standard. Referring to FIG. 10, the EHT STA may be the HE STA, may be the VHT STA, may be the HT STA, and may be the OFDM PHY STA. In addition, the NEXT STA may be the EHT STA, may be the HE STA, may be the VHT STA, may be the HT STA, and may be the OFDM PHY STA.

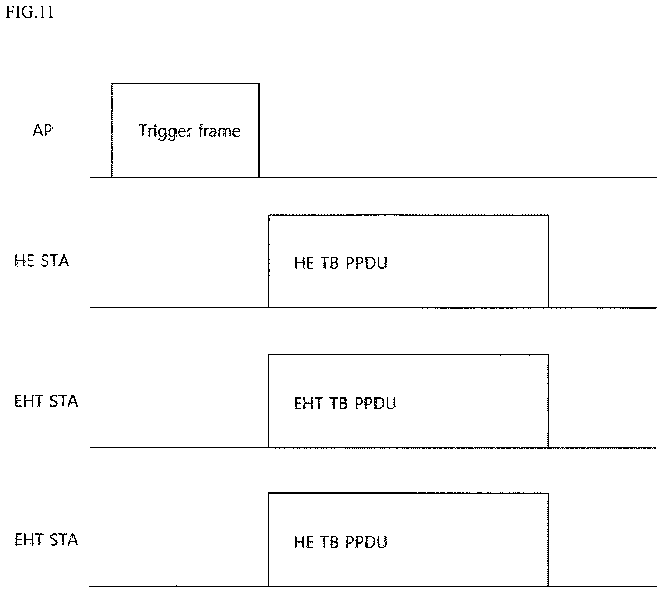

FIG. 11 illustrates an uplink (UL) multi user (MU) operation according to an embodiment of the present disclosure.

Referring to FIG. 11, the AP may indicate transmission of the PPDU to at least one STA through a specific frame (for example, triggering frame), and at least one STA may transmit the PPDU which has same or different format at the same time on the basis of a specific frame transmitted from the AP.

Specifically, as illustrated in FIG. 11, a frame which indicates (solicits) or triggers a multi-user (MU) transmission may be transmitted, and on the basis of the frame, transmission or the response to the frame may be performed by one or more STAs. At this time, when transmitting the response to the frame is performed by the one or more STAs, one or more STAs may perform the response simultaneously and immediately based on the frame and the response to the frame may start transmission at the end of the PPDU including the frame after the SIFS. For example, when the frame indicates an immediate response, one or more STAs may transmit the response to the frame immediately. The frame which indicates or triggers transmission to one or more STAs may be a frame including information which indicates or triggers the UL transmission to one or more STAs, in the MAC header or the trigger frame. At this time, the frame may include information (for example, TRS control subfield) which triggers or indicates the UL transmission only to one STA in the MAC header.

For example, information which indicates or triggers the UL transmission included in the MAC header may be a triggered response scheduling (TRS) or a TRS control subfield included in a HT control field, a control subfield, or an A-control subfield.

The frame for indicating or triggering the UL transmission may be transmitted by the AP, and when the frame for indicating or triggering the UL transmission is the trigger frame, the response thereto may be transmitted through a trigger-based PPDU (TB PPDU). At this time, the TB PPDDU may include the NEXT TB PPDU defined in the next standard as well as the HE TB PPDU and the EHT TB PPDU as described above.

The HE TB PPDU may be configured by a preamble, data and a packet extension (PE), and the preamble may include the L-STF, the L-LTF, the L-SIG, the RL-SIG, the HE-SIG-A, the HE-STF, and the HE-LTF, sequentially.

The EHT TB PPDU and the NEXT TB PPDU may be configured by the preamble, the data and the PE, and the preamble of the EHT TB PPDU and the NEXT TB PPDU may include the L-STF, the L-LTF, the L-SIG, the RL-SIG, the U-SIG, the (EHT-/NEXT-)STF, and the (EHT-/NEXT-)LTF, sequentially.

The frame which indicates or triggers transmission of the PPDU to one or more STAs may include information necessary for transmitting the TB PPDU by one or more STAs. For example, when the type subfield included in the frame is "01" (B3, B2) and the subtype subfield is "0010" (B7, B6, B5, B4), the type subfield and the frame including the subtype subfield may be the trigger frame which is a control frame.

In case that the response of the TB PPDU is indicated or triggered to the multiple STAs, when the formats of the PPDU to which the multiple STAs respond are different from each other, the problem that it is difficult to receive the PPDU which is the response to which the AP indicating or triggering the response is transmitted from the multiple STAs may occur. The problem that it is difficult to receive the PPDU which is a response to which the AP indicating or triggering the response is transmitted from the multiple STAs may occur if information included in the preamble of the PPDU to which the multiple STAs respond are different from each other according to the format.

Accordingly, in case that the multiple STAs responds to the frame of the AP in order to solve the problem, the types of information included in the responding PPDU format and/or the preamble of the PPDU may be configured to be identical to each other. For example, in case that the multiple STAs transmits the HE TB PPDU in response to the frame of the AP, the AP may transmit information or an appointment about information included in the HE TB PPDU may be determined so that information included in the L-STF, the L-LTF, the L-SIG, the RL-SIG, and the HE-SIG-A are identical to each other, so as to enable the AP to successfully receive the preamble transmitted by the multiple STAs. However, if the HE TB PPDU, the EHT TB PPDU, and the NEXT TB PPDU are simultaneously transmitted through the overlapping subband, since the TB PPDU formats are different from each other, the problem that it is difficult to receive the same by the AP may occur.

According to an embodiment of the present disclosure, the HE STA may transmit the HE TB PPDU. In addition, the EHT STA may transmit the EHT TB PPDU or the HE TB PPDU. In addition, the NEXT STA may transmit the NEXT TB PPDU, the EHT TB PPDU, or the HE TB PPDU. This is because the STA of any standard may include a function of a previous standard, as illustrated in FIG. 10.

As illustrated in FIG. 11, in case that the AP transmits the frame for scheduling transmission of the TB PPDU to the HE STA and the EHT STA and indicates or triggers transmission of the TB PPDU through the frame, an accurate indication or protocol for the TB PPDU format may not exist. In this case, the HE STA may transmit the HE TB PPDU in response to the frame, and the EHT STA may respond by using the EHT TB PPDU or the HE TB PPDU. In this case, it is difficult to receive, by the AP, the TB PPDU transmitted by the STA, and even if the successful transmission is not performed since the AP fails to successfully receive the TB PPDU from the multiple STAs, the problem that the medium is occupied to reduce the transmission opportunity of the other STAs may occur.

Hereinafter, in the present disclosure, the indicating to the STA may mean the indicating the response from the STA, and the trigger and the indication may be used as same meaning.

In addition, the HE trigger frame, the EHT trigger frame, and the NEXT trigger frame may be the trigger frame defined from the HE, the EHT, and the NEXT standard, respectively. In addition, the HE TRS, the EHT TRS, and the NEXT TRS in the present disclosure may be the TRS defined from the HE, the EHT, and the NEXT standard, respectively.

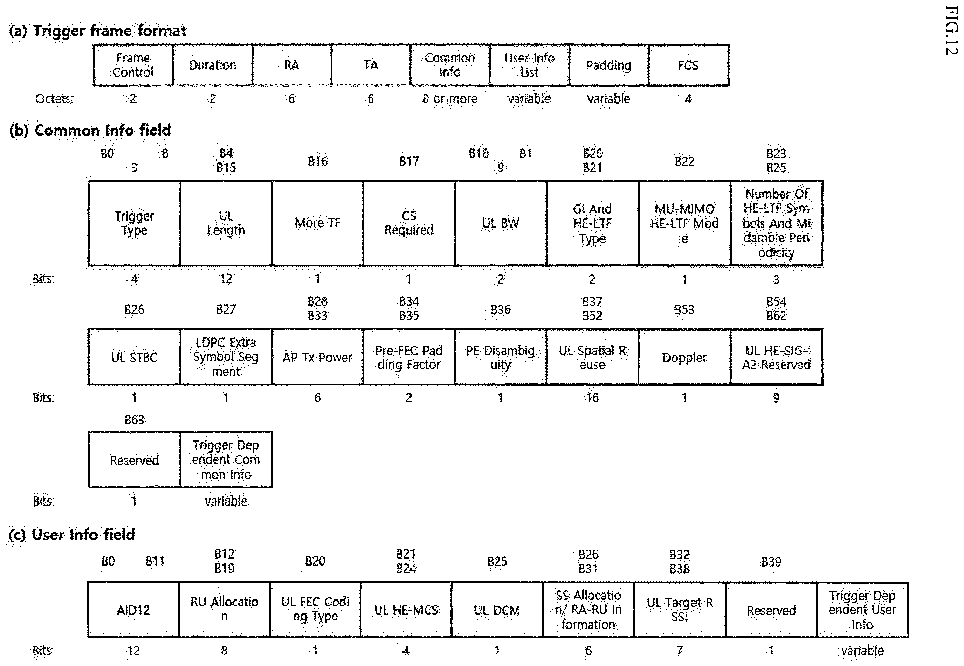

FIG. 12 illustrates a trigger frame format according to an embodiment of the present disclosure.

FIG. 12A illustrates a trigger frame format, and FIG. 12B and FIG. 12C illustrate a common information (info) field and a user information (info) field which are the fields included in the trigger frames, respectively.

Referring to FIG. 12A, the frame may include a frame control field, a duration field, and an address field as a trigger MAC header, and may include a common information field and a user information list field. The address field may include a resource allocation (RA) field and a transmission address (TA) field.

The common information field may include information commonly corresponding to all STAs which are indicated by the trigger frame. FIG. 12B illustrates an example of the common information field.

The user information list field may include 0 or more user information field, and the user information list field of the trigger frame, excluding a specific type of the trigger frame, may include 1 or more user information fields. FIG. 12C illustrates one example of the user information field.

The trigger frame may further include a padding field and a frame check sequence (FCS) field. The padding field may be used to extend the length of the frame to secure a time which the STA receiving the trigger frame requires to prepare the response to the trigger frame, and may be selectively included in the trigger frame.

Referring to FIG. 12B, the common information field may include a trigger type subfield. The trigger type subfield may be used for identifying the trigger frame variant. Otherwise, the type of the trigger frame may be indicated based on a value of the trigger frame subfield. In addition, a length and information included in a trigger dependent common info subfield and a trigger dependent user info subfield illustrated in FIG. 12 may be determined based on the trigger type subfield. For example, the trigger type subfield may be presented through B0 bit to B3 bit of the common information field.

The common information field may include an uplink (UL) length subfield. The UL length subfield may include information about the length of the TB PPDU which is the response to the trigger frame, and may include information about the length of the frame responding to the trigger frame. In addition, the UL length subfield may indicate the value to be included in the length subfield of the L-SIG of the TB PPDU responding to the trigger frame. Therefore, the STA which receives the trigger frame and responds by using the TB PPDU may configure the value of the length subfield included in the L-SIG of the TB PPDU on the basis of the value of the UL length subfield included in the received trigger frame. Specifically, the STA responding to the TB PPDU may configure the length subfield included in the L-SIG of the TB PPDU by the value of the UL length subfield included in the received trigger frame. For example, the STA may configure the length subfield included in the L-SIG of the TB PPDU and transmit the TB PPDU on the basis of the value of B4 to B15 bit of the common information field indicating the UL length subfield.

In addition, the common information field may further include an UL bandwidth (BW) subfield. The UL BW subfield may indicate the BW value included in a signaling field (for example, HE-SIG-A or U-SIG, etc.) of the TB PPDU responding to the trigger frame, and indicate a maximum BW of the TB PPDU transmitted in response to the trigger frame. Therefore, the STA may configure the BW value included in the signaling field of the TB PPDU on the basis of the value of the UL BW subfield included in the trigger frame.

In addition, the common information field may further include information to be included in a signaling field of the TB PPDU which is the response to the trigger frame. Therefore, the STA receives the trigger frame, and then configures information included in the TB PPDU on the basis of information included in the trigger frame.

Referring to FIG. 12C, the user information field may include an AID12 subfield. The AID12 subfield may be used for indicating a function of the user information field or an intended receiver of the user information field including the AID12 subfield. Therefore, the AID12 subfield may perform a role of indicating the function of the trigger frame or the intended receiver of the trigger frame including the AID12 subfield. For example, when the value of AID12 subfield is a preconfigured value, the user information field may indicate random access resource unit (RA-RU). That is, the preconfigured value of the AID12 subfield may indicate that the user information field indicates the RA-RU. Specifically, when the value of the AID12 subfield is "0", the user information field may indicate the RA-RU for the associated STAs. For example, when the value of the AID12 subfield is "0", the user information field may indicate the RA-RU for the associated STAs, and when the value of the AID12 subfield is "2045", the user information field may indicate the RA-RU for unassociated STAs. The STA corresponding to the STA ID (for example, associated ID (AID)) indicated by the value of the AID12 subfield may indicate the response by using the trigger frame including the AID subfield or the user information field including the AID12 subfield. For example, the AID12 subfield may indicate 12LSBs of the AID or the AID. The STA corresponding to the value indicated by the AID12 subfield may transmit the TB PPDU in response to the received trigger frame. In this case, the value of the AID 12 subfield may be a range of "1" to "2007" (including 1 and 2007), and when the AID12 subfield has a preconfigured value (for example, "2046"), the RU corresponding to the preconfigured value of the AID 12 subfield may not be assigned to any STAs. In addition, when the AID subfield is a preconfigured value (for example, "4095"), the preconfigured value may indicate a start of padding of the trigger frame.

Information of the user information field including the AID12 subfield may be information corresponding to the STAs indicated by the AID12 subfield. For example, the resource unit (RU) allocation subfield may indicate a size, a location, and the like of the RU. At this time, a value of the RU allocation subfield of the user information field including the AID12 subfield may be information corresponding to the STA indicated by the AID12 subfield. That is, the RU indicated by the RU allocation subfield of the AID12 subfield may be the RU allocated to the STA indicated by the AID 12 subfield.

In addition, the user information field may indicate a coding method (UL FEC coding type) for generating the TB PPDU transmitted in response to the trigger frame, a modulation method (UL HE-MCS, UL DCM), and a power (UL Target RSSI), and the like.

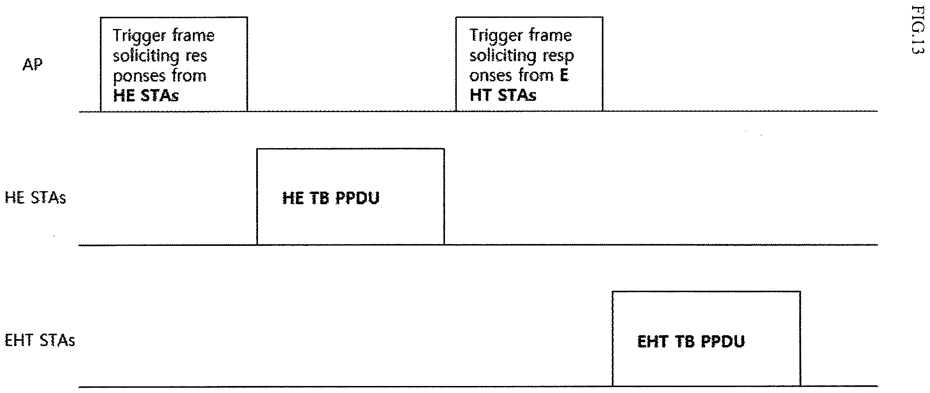

FIG. 13 illustrates an UL MU operation according to another embodiment of the present disclosure.

Referring to FIG. 13, when the AP indicates transmission of the PPDU through the trigger frame, the STAs transmit, as a response, PPDUs of different formats on the basis of the trigger frame. An embodiment illustrated in FIG. 13 may be a method for solving the problem illustrated in FIG. 10 and FIG. 11, and the contents described above may be omitted.

Specifically, the EHT STA may not transmit the HE TB PPDU and may not perform the HE UL MU operation. In addition, the EHT STA may respond to the TRS (for example, PPDU including the TRS control subfield) or a trigger frame by the EHT TB PPDU format

The STA may transmit only the TB PPDU corresponding to the latest standard by which the STA is supportable, and may not transmit the TB PPDU corresponding to the previous standard. That is, the NEXT STA may transmit only the NEXT TB PPDU, and may not transmit the HE TB PPDU corresponding to the previous standard. In addition, the NEXT STA may perform the NEXT UL MU operation, but may not perform the HE UL MU operation. That is, the EHT STA may transmit only the EHT TB PPDU in response to the trigger frame of the AP, and may perform only the EHT UL MU operation.

Therefore, it is unnecessary that the STA responding to the trigger frame or the TRS selects any format which responds by the TB PPDU, and the method has an advantage that the STA responding to the trigger frame or the TRS can be simply implemented.

In addition, the STA which indicates the transmission of the TB PPDU by transmitting the trigger frame or the TRS may be scheduled so that the different TB PPDUs are not transmitted while overlapping each other. That is, the STA transmitting the trigger frame or the TRS may not indicate the HE STA, the EHT STA and/or the NEXT STA, together, by the STA responding to the trigger frame or the TRS. Otherwise, the STA responding to the trigger frame or the TSR may not indicate the HE STA, the EHT STA and/or the NEXT STA through one PPDU. Otherwise, the HE trigger frame (or TRS), the EHT trigger frame (or TRS), the NEXT trigger frame (or TRS) may not be included in one PPDU, or the HE STA, the EHT STA, and the NEXT STA may not be indicated by one trigger frame. Otherwise, the EHT STA and the NEXT STA may not be indicated by the HE trigger frame. However, there is an exception in case of indicating the associated PPDU (PPDU in which the multiple PPDU exists in a frequency domain division type). In the present disclosure, the HE STA may mean the HE STA, other than the EHT STA and the NEXT STA. In addition, the EHT STA may mean the EHT STA, other than the NEXT STA.

Referring to FIG. 13, the AP may transmit the trigger frame indicating only the HE STAs. In addition, since the STA receiving the trigger frame is the HE STA, the response may be performed by using the HE TB PPDU. In addition, the AP may transmit the trigger frame indicating only the EHT STAs. In addition, since the STA receiving the trigger frame which indicates only the EHT STAs is the EHT STA, the response may be performed by using the EHT TB PPDU.

That is, in an embodiment of FIG. 13, the TB PPDU format of the STA responding to the trigger frame or the TRS is limited, and accordingly the trigger frame or the TRS are scheduled, so that the problem described in FIG. 10 and FIG. 11 may be solved.

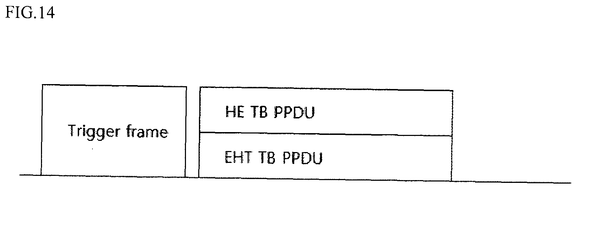

FIG. 14 illustrates an UL MU operation according to another embodiment of the present disclosure.

Referring to FIG. 14, an access point (AP) may transmit one trigger frame to indicate transmission of the PPDU of each different format to one or more non-AP STAs.

Specifically, a method described in FIG. 14 may be the method for solving the problem described in FIG. 10 and FIG. 11, and may be an exceptional case of the method described in FIG. 13. A method of FIG. 14 may be an exceptional case of the method of transmitting the trigger frame or the TRS which is the method described in FIG. 13. Hereinafter, since the contents described above may be identically applied to the method, the description thereof may be omitted.

In case of indicating the associated PPDU (aggregated PPDU), it is possible that the AP indicates transmission of the PPDU to all of the HE STA, the EHT STA and/or the NEXT STA. At this time, the HE TB PPDU, the EHT TB PPDU and/or the NEXT TB PPDU transmitted as the response may be scheduled so as not to be transmitted while overlapping each other in the frequency area. Otherwise, 20 MHz sub channels including the RUs which is a resource unit of the HE TB PPDU and 20 MHz sub channels including the RUs of the EHT TB PPDU may be allocated not to overlap each other

When the HE PPDU is included in the associated PPDU, the HE PPDU may exist in an area including the primary channel, but when the associated PPDU is the TB PPDU, the HE PPDU may exist in an area which does not include the primary channel.

Referring to FIG. 14, in response to one trigger frame, the HE TB PPDU and the EHT TB PPDU may be transmitted from the plurality of STAs. In addition, at this time, the HE TB PPDU and the EHT TB PPDU may be transmitted through the RUs which do not overlap each other. That is, transmission of the TB PPDU of the different formats may be indicated by the plurality of STAs through one trigger frame, and the RU for the transmission of the TB PPDU of the different formats may not overlap each other. Therefore, the plurality of STAs may transmit the PPDU of the different formats (for example, the HE TB PPDU and the EHT TB PPDU) by using the different RUs on the frequency axis, on the basis of the transmitted trigger frame.

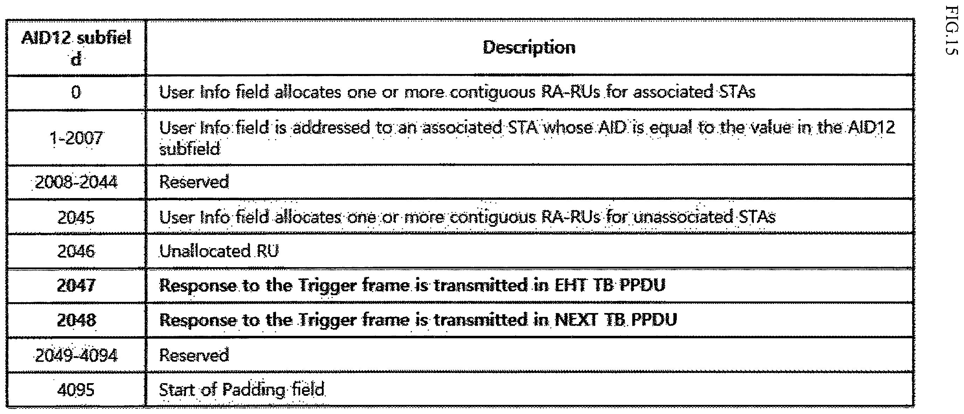

FIG. 15 illustrates a method for indicating a trigger-based PPDU format according to an embodiment of the present disclosure.

Referring to FIG. 15, one STA may selectively transmit the PPDU of the different formats by being indicated by the triggering frame indicating transmission of the PPDU.

Specifically, the EHT STA may selectively transmit the EHT TB PPDU as well as the legacy PPDU (for example, HE TB PPDU), and the NEXT STA may selectively transmit the HE TB PPDU, the EHT TB PPDU and/or the NEXT TB PPDU. In this case, the STAs to which various standards are applied, respectively, may be individually scheduled by one frame or one PPDU. In the wireless LAN, since common resource is used together with the STAs to which various standards are applied, the method may be an advantage. For example, the HE STA (HE STA other than EHT STA) and the EHT STA may respond by using the HE TB PPDU through one frame. That is, the non-AP STA may transmit the triggering frame to indicate transmission of the HE TB PPDU to the EHT STA as well as the HE STA.

In addition, information for selecting the TB PPDU format may be included in the PPDU including the trigger frame which is the triggering frame, the TRS, the trigger frame or the PPDU including the TRS control subfield. That is, information for selecting the format of the TB PPDU is included in the triggering frame to transmit the same to at least one non-AP STA by the AP STA, and the non-AP STA may select the format of the PPDU to respond based on information included in the transmitted triggering frame. Hereinafter, at least one non-AP STA may transmit the PPDU to the AP on the basis of the selected format

Information about the format (TB PPDU format) of the PPDU which is the response to the triggering frame may exist in the MAC level, the trigger frame, which is one of the triggering frame, may be divided into the HE trigger frame, the EHT trigger frame, and the NEST trigger frame, and the response to each trigger frame may be divided from the HE TB PPDU, the EHT TB PPDU and the NEXT TB PPDU.

In addition, the dividing the trigger frame into the HE trigger frame, the EHT trigger frame, and the NEXT trigger frame may be the same meaning as the dividing the TB PPDU format which is the response to the trigger frame from the HE TB PPDU, the EHT TB PPDU, and the NEXT TB PPDU.

Whether the format of the trigger frame for dividing the format of the TB PPDU is the HE trigger frame, the EHT trigger frame, or the NEXT trigger frame may be identified based on a frame control field included in the MAC header. Specifically, the format of the trigger frame may be divided based on the type subfield, the subtype subfield and/or a control frame extension subfield. In addition, when the value of the type subfield, the subtype subfield and/or the control frame extension subfield is a preconfigured value, the trigger frame may be identified as the HE trigger frame, and when the value thereof is the other preconfigured value, the trigger frame may be identified as the EHT trigger frame. In addition, when the value of the type subfield, the subtype subfield and/or the control frame extension subfield is the other preconfigured value, the trigger frame may be identified as the NEXT trigger frame.

For example, when the type subfield is 01 (B3, B2) and the subtype subfield is 0010 (B7, B6, B5, B4), the frame format including the type subfield and the subtype subfield may be the HE trigger frame. In this case, the entries of the type subfield (2 bits), the subtype subfield (4 bits), and/or the control frame extension subfield (4 bits), to which the limited bit number is allocated, should be additionally used in the EHT standard and the NEXT sanded.

In addition, whether the format of the trigger frame is the HE trigger frame or the EHT trigger frame may be identified based on the common information field included in the trigger frame. That is, a format of the PPDU transmitted in response to the trigger frame may be determined based on the value of the specific subfield (the first subfield) included in the common information field. For example, the non-AP STA may select the HE TB PPDU or the EHT TB PPDU according to the value of the common information field and may transmit the same through the allocated RU. At this time, the specific subfield (the second subfield) of the user information field as well as the common information field may be additionally used for identifying the format of the PPDU.

That is, a variant for determining the format of the PPDU which is the response to the trigger frame may be determined based on the common information field of the trigger frame, and the format of the PPDU may be determined according to the determined variant. For example, when the variant for determining the format of the PPDU is determined as the HE variant by the common information field, the non-AP STA may respond by using the HE TB PPDU, and when the variant for determining the format of the PPDU is determined as the EHT variant by the common information field, the non-AP STA may respond by using the EHT TB PPDU.

At this time, the variant for determining the format of the PPDU may additionally use the user information field as well as the common information field.

For example, whether the trigger frame is the HE trigger frame, the EHT trigger frame, or the NEXT trigger frame may be determined based on the trigger type subfield. For example, when the trigger type subfield value is a preconfigured value, the trigger frame may be the HE trigger frame. In addition, when the trigger type subfield value is a preconfigured value, the trigger frame may be the EHT trigger frame. When the trigger type subfield value is a preconfigured value, the trigger frame may be the NEXT trigger frame.

For example, when the trigger type subfield value is 0 to 7, the trigger frame may be the HE trigger frame, and when the value thereof is not 0 to 7, the trigger frame may be the EHT trigger frame or the NEXT trigger frame. The trigger type subfield indicates various kinds of the trigger frame types, and at this time, the disadvantage that the limited trigger type subfield space should be used may exist.

According to another embodiment, whether the trigger frame is the HE trigger frame, the EHT trigger frame, or the NEXT trigger frame may be determined based on the UL length subfield of the trigger frame. For example, whether the trigger frame is the HE trigger frame, the EHT trigger frame, or the NEXT trigger frame may be determined based on mod (remainder) operation value of the UL length subfield value. That is, whether the format of the PPDU to be transmitted in response to the trigger frame is the HE PPDU or the EHT PPDU may be determined by using the value of the UL length subfield.

More particularly, whether the trigger frame is the HE trigger frame, the EHT trigger frame, or the NEXT trigger frame may be determined based on mod (remainder) 3 operation value (remainder when dividing the UL length subfield by 3) of the UL length subfield. For example, when the UL length subfield value mod 3 is not 0, the trigger frame may be the HE trigger frame. In addition, the UL length subfield value mod 3 is 1, the trigger frame may be the HE trigger frame. In addition, when the UL length subfield value mod 3 is 0, the trigger frame may not be the HE trigger frame. In addition, when the UL length subfield value mod 3 is 0, the trigger frame may be the EHT trigger frame or the NEXT trigger frame.

That is, when the UL length subfield value of the trigger frame mod 3 is not 0, the response to the trigger frame may be transmitted to the HE TB PPDU, and when the UL length subfield value mod 3 is 1, the response to the trigger frame may be transmitted to the HE TB PPDU.

In addition, when the UL length subfield value of the trigger frame mod 3 is 0, the format of the PPDU transmitted in response to the trigger frame may be the EHT TB PPDU.

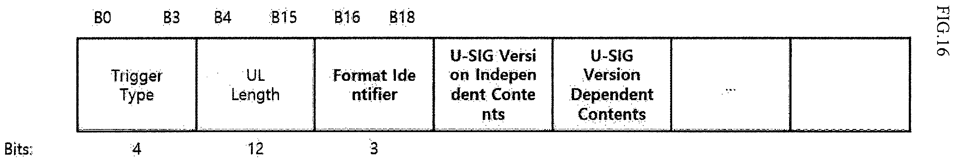

In addition, it is possible to divide the HE trigger frame, the EHT trigger frame, and the NEXT trigger frame by using the methods together with the additional trigger frame discrimination method. For example, it is possible to divide the HE trigger frame, the EHT trigger frame, and the NEXT trigger frame by using the discrimination method illustrated in FIG. 16 together.

According to an embodiment, whether the format of the trigger frame is the HE trigger frame, the EHT trigger frame, or the NEXT trigger frame may be determined based on the user information field (user info field) of the trigger frame.

That is, whether the format of the trigger frame is the HE trigger frame or the EHT trigger frame may be identified based on the user information field included in the trigger frame, similarly to the common information field as described above. That is, the format of the PPDU to be transmitted in response to the trigger frame may be determined based on the value of a specific field (the second subfield) included in the user information field. For example, the non-AP STA may select the HE TB PPDU or the EHT TB PPDU and transmit the same through the allocated RU according to the value of the user information field. At this time, a specific field (the first subfield) of the common information field as well as the user information field may be additionally used for identifying the format of the PPDU.

That is, the variant for determining the format of the PPDU which is the response to the trigger frame may be determined based on the user information field of the trigger frame, and the format of the PPDU may be determined according to the determined variant. For example, when the variant for determining the format of the PPDU is determined as the HE variant by the user information field, the non-AP STA may respond by using the HE TB PPDU, and when the variant for determining the format of the PPDU is determined as the EHT variant by the user information field, the non-AP STA may respond by using the EHT TB PPDU.

At this time, the variant for determining the format of the PPDU may additionally use the common information field as well as the user information field.

For example, whether the variant corresponds to the HE trigger frame, the EHT trigger frame, or the NEXT trigger frame may be determined based on the AID12 subfield. According to an embodiment, whether the variant corresponds to the HE trigger frame, the EHT trigger frame, or the NEXT trigger frame may be determined according to whether to include the AID 12 subfield of the preconfigured value. Further, in this case, whether an STA indicated by a certain user information field is required to continuously identify an AID12 subfield existing after the certain user information field in order to determine the trigger frame format may be a problem. In order to solve this problem, a user information field including an AID12 subfield indicating the type of the trigger frame may be located at the front side of the user information list. In addition, in order to prevent an erroneous operation of an HE STA which does not understand such a signaling method, a user information field including an AID12 subfield indicating a type of a trigger frame may be located behind the user information field corresponding to the HE STA.

In addition, since information of the other subfield excluding the AID12 subfield included in the user information field is not necessary to the TB PPDU response, subfields of a user information field including an AID12 subfield indicating a type of a trigger frame is may be omitted. That is, the length of the user information field may differ based on the AID12 subfield. Referring to FIG. 15, the AID12 subfield may play a role of indicating the responding TB PPDU format. For example, when the AID12 subfield is a preconfigured value, the response to the trigger frame including the AID12 subfield configured by the preconfigured value may be the EHT TB PPDU. For example, when the AID12 subfield value is 2047, the response to the trigger frame including the AID 12 subfield may be the EHT TB PPDU. In addition, when the AID 12 subfield is a preconfigured value, the response to the trigger frame including the AID12 subfield configured by the preconfigured value may be the NEXT TB PPDU. For example, when the AID12 subfield value is 2048, the response to the trigger frame including the AID12 subfield may be the NEXT TB PPDU.

According to another embodiment, when a response is performed based on the user information field existing in a location preconfigured by the AID12 subfield of the preconfigured value, the response may be performed by the TB PPDU format corresponding to the preconfigured value. For example, when the response is performed based on the user information field existing after the AID12 subfield of the preconfigured value, the response may be performed by the TB PPDU format corresponding to the preconfigured value. When a plurality of values indicating the TB PPDU format exist and the response is performed based on the user information field exiting after both of a preconfigured value 1 and a preconfigured value 2, the response may be performed by the TB PPDU format according to the preconfigured priority among the TB PPDU formats corresponding to the preconfigured value 1 and the TB PPDU format corresponding to the preconfigured value 2. Referring to FIG. 15, when the response is performed based on the user information field existing after the AID12 subfield configured as 2047, the response may be performed by using the EHT TB PPDU. In addition, when the response is performed based on the user information field existing after the AID12 subfield configured as 2048, the response may be performed by using the NEXT TB PPDU. In addition, when the response is performed based on the user information field existing after both the AID12 subfield configured as 2047 and the AID 12 subfield configured as 2048, the response may be performed by using the NEXT TB PPDU. In addition, when the response is performed based on the user information field existing before both the AID12 subfield configured as 2047 and the AID 12 subfield configured as 2048, the response may be performed by using the HE TB PPDU.

In an embodiment, an example indicating the type of the trigger frame by the AID 12 subfield is descried, but the present disclosure is not limited thereto and it is possible to indicate the type of the trigger frame through another subfield of the user information field.

According to an embodiment, the HE trigger frame, the EHT trigger frame, and the NEXT trigger frame may be divided based on the padding field of the trigger frame. For example, the HE trigger frame, the EHT trigger frame, and the NEXT trigger frame may be determined according to whether a preconfigured value indicating whether the padding field is the HE trigger frame, the EHT trigger frame, or the NEXT trigger frame is included.

According to an embodiment of the present disclosure, it is possible to divide the HE trigger frame, the EHT trigger frame, and the NEXT trigger frame by combining the discrimination method of the plurality of trigger frames illustrated in the present disclosure. In addition, the description related to the trigger frame may be not limited thereto, and may be applied to the TRS.

According to another embodiment of the present disclosure, the AP may be unable to indicate transmission of the EHT PPDU and the HE PPDU together through the triggering frame. That is, the EHT AP fails to transmit the trigger frame indicating the HE TB PPDU and the EHT TB PPDU together, and may indicate only one PPDU format.

FIG. 16 illustrates a trigger frame format for indicating a trigger-based PPDU format according to an embodiment of the present disclosure.

Referring to FIG. 16, the trigger frame may include information indicating the format of the PPDU to be transmitted in response to the trigger frame and the format of the trigger frame, and the length and the contents included in the trigger frame may vary according to the indicated PPDU format.

Specifically, the trigger frame may include information indicating the format of the trigger frame. That is, the trigger frame may include information indicating whether the trigger frame is the HE trigger frame, the EHT trigger frame, or the NEXT trigger frame. Therefore, information for determining the format of the PPDU indicated by the trigger frame may be included.

In addition, it is possible that the length and the contents of the trigger frame varies based on information indicating the format, and the trigger frame may include information indicating which one among the HE TB PPDU, the EHT TB PPDU, and the NEXT TB PPDU is transmitted in response to the trigger frame. For example, the information indicating the format of the trigger frame or the information indicating the TB PPDU format in response to the trigger frame as described above may be included in an identifier subfield.

Therefore, it is possible to determine the format of the trigger frame on the basis of the format identifier subfield. In addition, it is possible to determine the TB PPDU format which responds based on the format identifier subfield. That is, it is possible to respond by using the TB PPDU of the standard corresponding to the value indicated by the format identifier subfield. According to an embodiment, the format identifier subfield may be 3-bit. In addition, the format identifier subfield may exist after B16 of the common information field.

For example, the format identifier subfield may exist after the UL length subfield. In addition, the trigger frame illustrated in FIG. 12 may be a format understood by the HE STA, so that the format identifier subfield may exist in the trigger frame after the EHT standard. That is, when the trigger frame includes the format identifier subfield, the trigger frame may be the EHT trigger frame or the NEXT trigger frame. Otherwise, when the trigger frame includes the format identifier subfield, the TB PPDU responding to the trigger frame may be the EHT TB PPDU or the NEXT TB PPDU. In addition, in this case, the values indicated by the format identifier subfield may be included in a field after the EHT standard.

According to an embodiment, it is possible that the U-SIG field included in the TB PPDU may be based on the PPDU indicating the TB PPDU. According to an embodiment, it is possible that the U-SIG field included in the TB PPDU may be based on the trigger frame indicating the TB PPDU. More specifically, it is possible that the U-SIG field included in the TB PPDU may be based on the format identifier subfield included in the trigger frame indicating the TB PPDU.

For example, it is possible that the PHY version identifier of the U-SIG field included in the TB PPDU may be based on the format identifier subfield included in the trigger frame indicating the TB PPDU. The PHY version identifier may indicate the PHY version of the PPDU transmitted by the non-AP STA or the AP. For example, it means that when the value of the PHY version identifier is configured as "0", the corresponding PPDU is the EHT PPDU in which the PHY version is the EHT.

The PHY version identifier may be used for identifying whether the format of the PPDU is the EHT PPDU and may be configured based on the format identifier included in the trigger frame. For example, the non-AP STA may configure the value of the PHY version field included in the PPDU which is the same as the value of the format identifier included in the trigger frame. Therefore, the non-AP STA may determine whether the format of the PPDU to be transmitted based on the value of the format identifier included in the trigger frame is the EHT TB PPDU.

For example, the PHT version identifier value of the U-SIG field included in the TB PPDU may be configured as the same value as the format identifier subfield included in the trigger frame indicating the TB PPDU. Otherwise, when the standard ranges indicated by the PHT version identifier subfield of the U-SIG field and the format identifier subfield of the trigger frame are different from each other, the PHY version identifier value of the U-SIG field included in the TB PPDU may be configured as the value of adding or subtracting the preconfigured value to or from the format identifier subfield value included in the trigger frame indicating the TB PPDU.

The PHY version identifier subfield of the U-SIG field may be the PHY version field as described above. In addition, the PHY version identifier subfield of the U-SIG field may play a role of indicating the format of the U-SIG field. In addition, the PHY version identifier subfield of the U-SIG field may play a role of indicating the PHY version of the PPDU including the U-SIG field.

Referring to FIG. 16, the trigger frame may include the format identifier subfield. In addition, a standard which the trigger frame employs or a TB PPDU format which is to be used for a response to the trigger frame may be determined based on the format identifier subfield.

In addition, it is possible that the trigger frame includes information included in the U-SIG field of the TB PPDU responding to the trigger frame. For example, the trigger frame may include information to be included in the version independent field and the version dependent field of the U-SIG field. Information to be included in the U-SIG field may include information to be included in the version independent field and the version dependent field.

Information to be included in the version independent field of the U-SIG field may be the U-SIG version independent contents. Information to be included in the version dependent field of the U-SIG field may be the U-SIG version dependent contents. In addition, the format identifier subfield described above may be one among the U-SIG version independent contents. According to an embodiment of the present disclosure, it is possible that the contents and the length to be included in the U-SIG field of the TB PPDU included in the trigger frame vary based on the format identifier subfield included in the trigger frame. For example, it is possible that the length and the contents of the U-SIG version dependent contents of the TB PPDU included in the trigger frame vary based on the format identifier subfield included in the trigger frame. For example, the U-SIG version independent contents may be a subfield having the length and the contents regardless of the format identifier subfield, and the U-SIG version dependent contents may be a subfield having the length and the contents based on the format identifier subfield. According to an embodiment, it is possible that information to be included in the U-SIG field may be included in the common information field of the trigger frame. In addition, the U-SIG version dependent contents included in the trigger frame may include the BW, and puncturing information, and the like.

Referring to FIG. 16, the trigger frame may include the U-SIG version independent contents and the U-SIG version dependent contents. In addition, it is possible that the length and the contents of the U-SIG version independent contents or the U-SIG version dependent contents vary based on the format identifier subfield.

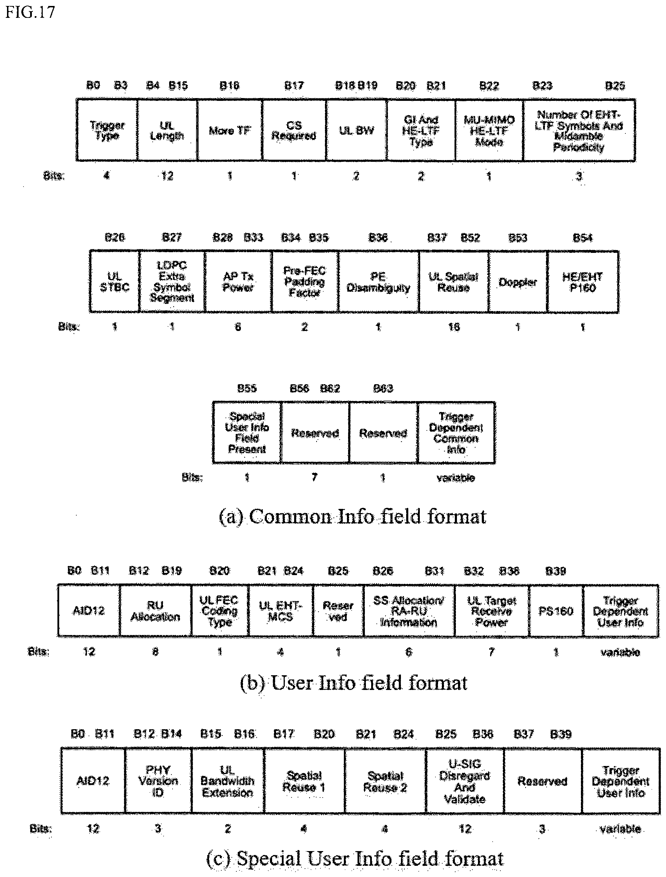

FIG. 17 illustrates a trigger frame format for indicating a trigger-based PPDU format according to another embodiment of the present disclosure.

Referring to FIG. 17, the STA may determine the format of the PPDU to be transmitted on the basis of the subfields included in the common information field and/or the user information field included in the triggering frame.

Specifically, FIG. 17A illustrates an example of the common information field included in the trigger frame, and FIG. 17B illustrates an example of the user information field. FIG. 17C illustrates an example of the specific user information field (special user info field).

The description of the fields which are the same as the fields described above among the fields illustrated in FIG. 17A to FIG. 17C may be omitted.

The common information field of FIG. 17A may be used for identifying the format of the PPDU indicated by the trigger frame as described above. For example, the common information field of the trigger frame may be used for identifying whether the format of the PPDU indicated by the trigger frame is the EHT TB PPDU or the HE TB PPDU.

Specifically, the HE/EHT P160 subfield (the first subfield) in the common information field illustrated in FIG. 17A may indicate the format of the PPDU transmitted from the primary channel of 160 MHz. For example, when the value of the HE/EHT P160 subfield is "1", transmission of the HE TB PPDU is indicated from the primary channel of 160 MHz, and when the value thereof is "0", transmission of the EHT TB PPDU is indicated from the primary channel of 160 MHz.

The user information field of FIG. 17B may be used for identifying the format of the PPDU indicated by the trigger frame as described above.

Specifically, PS160 subfield (the second subfield) in the user information field illustrated in FIG. 17B may indicate a location where the RU allocated by the RU allocation field of the user information field is located among the primary channel or the second channel of 160 MHz.

PS160 subfield may be used for indicating the format of the PPDU indicated by the trigger frame together with the HE/EHT P160 subfield of FIG. 17A. For example, in case that the value of the HE/EHT P160 subfield is configured as "1" and the transmission of the HE TB PPDU is indicated from the primary channel, when the value of the PS160 subfield is configured as "0", since it indicates that the RU is allocated to the primary channel, the STA may transmit the response to the trigger frame by using the HE TB PPDU from the primary channel.

However, in case that the value of the HE/EHT P160 subfield is configured as "1" and the transmission of the HE TB PPDU is indicated from the primary channel, when the value of the PS160 subfield is configured as "1', since it indicates that the RU is allocated to the secondary channel, the STA may transmit the PPDU from the secondary channel and at this time, the format of the PPDU is the EHT TB PPDU.

Hereinafter, the table 1 shows an example of the format of the PPDU according to the HE/EHT P160 subfield and the PS160 subfield.

[Table 1]

| Common Info field B54 | Common Info field B55 | User Info field B39 | Presence of Special User Info field | User Info field variant | TB PPDU type |
|---|---|---|---|---|---|
| 1 | 1 | 0 | No | HE variant | HE |
| 0 | 0 | 0 | Yes | EHT variant | EHT |
| 0 | 0 | 1 | Yes | EHT variant | EHT |
| 1 | 0 | 1 | Yes | EHT variant | EHT |
| 1 | 0 | 0 | Yes | HE variant | HE |

Referring to Table 1, B54 bit of the common information field indicates the value of the HE/EHT P160 subfield, and B39 bit indicates the value of PS160 subfield. The variant for determining the format of the PPDU according to the value of the HE/EHT P160 subfield and the value of the PS160 subfield is determined, and whether the type of the PPDU is the HE or the EHT is determined according to the determined variant.

The STA determines whether the format of the PPDU to be transmitted in response to the trigger frame is the EHT or the HE, by using the common information field and/or the user information field included in the trigger frame, generates the PPDU according to the determined format, and transmits the same to the AP.

FIG. 17C illustrates an example of the specific user information field including the PHY version identifier described above, and the PHY version identifier is used for identifying whether the PHT version is the EHT as described above. In addition, the PHT version identifier may be configured based on the format indicator of the trigger frame.

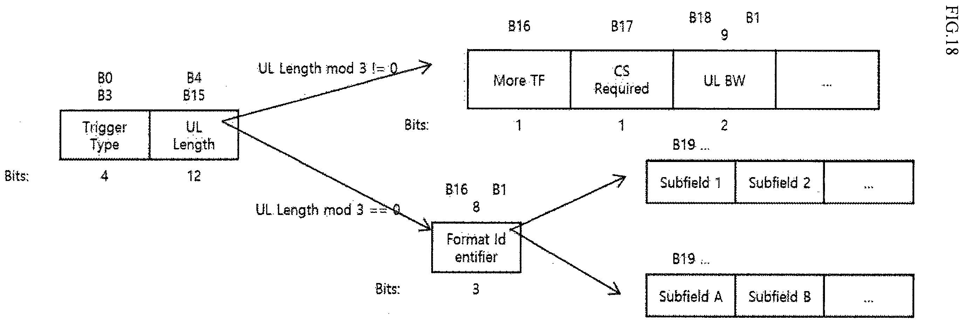

FIG. 18 illustrates a determination method of a trigger frame format according to an embodiment of the present disclosure.

FIG. 18 may be used by combining the embodiments described in FIG. 15 to FIG. 17 as described above, and the contents described above are omitted.

Specifically, as described in FIG. 16, the trigger frame may include the format indicator subfield. In addition, the trigger frame or the HE trigger frame described in FIG. 12 may not include the format indicator subfield. Therefore, a method for determining whether the trigger frame includes the format indicator subfield may be necessary. According to an embodiment, the trigger frame may include information indicating whether to include the format indicator subfield. For example, the common information field of the trigger frame may include information indicating whether to include the format indicator subfield. More specifically, the trigger type subfield of the trigger frame may include information indicating whether to include the format indicator subfield. For example, whether the format indicator subfield is included may be determined according to whether the trigger type subfield is the preconfigured value. For example, when the trigger type subfield has the value of 0 to 7, the format indicator subfield may not be included. In addition, when the trigger type subfield does not have the value of 0 to 7 or the trigger type subfield has the value of 8 to 15, the format indicator subfield may be included. In addition, in case that the trigger type subfield has the value of 0 to 7, a basic, a beamforming report poll (BFRP), a MU-BAR, a MU-RTS, a buffer status report poll (BSRP), a GCR MU-BAR, a bandwidth query report poll (BQRP), a NDP feedback report poll (NFRP) may be indicated. In this case, in case that the trigger type subfield has 8 to 15 value, the trigger frame type in case of the trigger type subfield having 0 to 7 value may be indicated, but may indicate that the trigger frame format does not include the format indicator subfield.

According to another embodiment, whether to include the format indicator subfield may be determined based on the UL length subfield of the trigger frame. For example, whether to include the format indicator subfield may be determined according to the trigger frame discrimination method based on the UL length subfield illustrated in FIG. 15. That is, whether to include the format indicator subfield may be determined based on the operation result of the UL length subfield value mod, more specifically, the result of the UL length subfield value mod 3.

For example, when the UL length subfield value mod 3 is not 0, the format indicator subfield may be not included, and when the mod 3 operation result thereof is 0, the format indicator subfield may be included, which may be connected to the previous embodiment in which the EHT trigger frame and the NEXT trigger frame includes the format indicator subfield, and the previous embodiment determining whether the trigger frame is the HE trigger frame on the basis of the result of the mod 3 operation of the UL length subfield value.

Referring to FIG. 18, whether the trigger frame is the HE trigger frame or whether the trigger frame includes the format indicator subfield may be determined based on the UL length subfield included in the trigger frame. For example, when the UL Length subfield value mod 3 is not 0, the trigger frame is the trigger frame (or HE trigger frame) having the common information field and the user information field described in FIG. 12, and determines not to include the format indicator subfield. In addition, when the response to the trigger frame is performed, the response may be performed by using the HE TB PPDU.

In addition, when the UL Length subfield value mod 3 is 0, it is determined that the trigger frame is the EHT trigger frame or the NEXT trigger frame and includes the format indicator subfield. In addition, remaining information (i.e., the common information field and the user information field) including the trigger frame may be determined based on the value indicated by the format indicator subfield. In addition, when the response to the trigger frame is performed, the response may be performed by using the TB PPDU of the standard indicated by the format indicator subfield. That is, when the format indicator subfield indicates the EHT standard, the response may be performed by using the EHT TB PPDU. In addition, when the format indicator subfield indicates the NEXT standard, the response may be performed by using the NEXT TB PPDU.

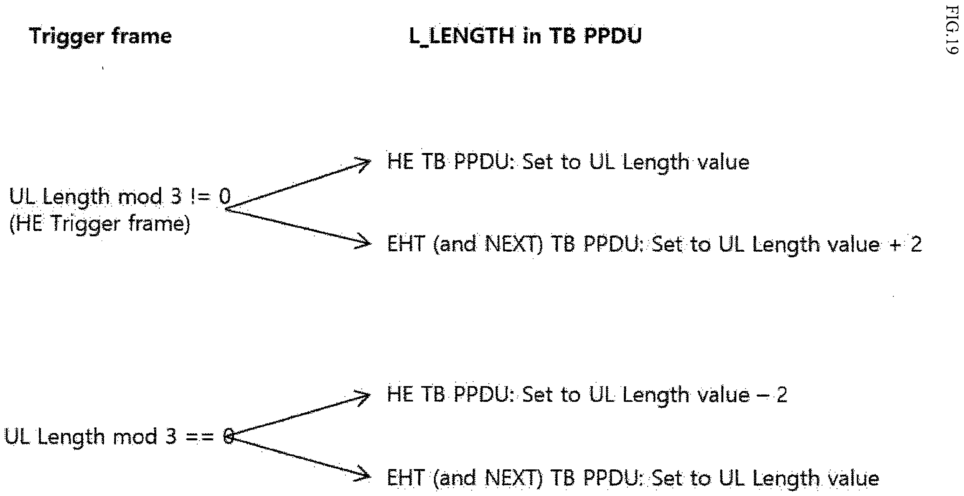

FIG. 19 illustrates a configuration method of a length field according to an embodiment of the present disclosure. The contents described in FIG. 15 to FIG. 18 in the embodiments of FIG. 19 may be omitted.

Referring to FIG. 19, the PPDU transmitted in response to the trigger frame may include the length fields having different values according to the format.

Specifically, the trigger frame may include the UL length subfield and the UL length subfield may indicate information regarding the length of the PPDU indicated by the trigger frame. For example, the UL length subfield may indicate information regarding the value of the length field included in the L-SIG field of the PPDU transmitted in response to the trigger frame. The length field included in the L-SIG field may be a length or duration information included in the legacy preamble. The length field included in the L-SIG field may be indicated as the L_LENGTH or the LENGTH, which is configured by the transmission parameter or the receipt parameter value.

According to an embodiment of the present disclosure, a method of configuring the length field included in the L-SIG field of the TB PPDU by using the UL length subfield included in the trigger frame may vary according to the format of the TB PPDU transmitted in response to the trigger frame. In addition, according to an embodiment of the present disclosure, a method of configuring the length field included in the L-SIG field of the TB PPDU by using the UL length subfield included in the trigger frame may vary according to the format of the trigger frame. In addition, according to an embodiment of the present disclosure, a method of configuring the length field included in the L-SIG field of the TB PPDU by using the UL length subfield included in the trigger frame may vary according to the value based on the value of the UL length field of the trigger frame.

As described above, the case that the UL length subfield value included in the trigger frame mod 3 which is a modular operation is not 0 exists, and the response by using the HE TB PPDU, the EHT TB PPDU or the NEXT TB PPDU is possible based on the basis of the trigger frame.

In case that the UL length subfield value included in the trigger frame mod 3 is not 0, when the HE TB PPDU is transmitted in response to the trigger frame, the length field of the L-SIG field included in the HE TB PPDU may be configured as the same value as the value of the UL length subfield of the trigger frame, which is for configuring the length subfield value included in the L-SIG field of the HE TB PPDU mod 3 not to be 0 (for example, 1).

In addition, the case that the UL length subfield value included in the trigger frame mod 3 is not 0, when the EHT TB PPDU or the NEXT TB PPDU is transmitted in response to the trigger frame, the length field of the L-SIG field included in the HE TB PPDU may be configured as the value which is a value of adding the preconfigured value to the value of the UL length subfield of the trigger frame. At this time, the preconfigured value may be 2 or -1, which is for configuring the length field value included in the L-SIG field of the HE TB PPDU mod 3 to be 0.

That is, when the format of the PPDU indicated by the trigger frame is the HE TB PPDU and the non-AP STA transmits the HE TB PPDU in response to the trigger frame, the value of the L_LENGTH parameter which is the value of the length field included in the L_SIG field of the TB PPDU may be configured as the value indicated by the UL length subfield included in the common information field of the trigger frame.

However, when the format of the PPDU indicated by the trigger frame is the EHT TB PPDU or the NEXT TB PPDU and the non-AP STA transmits the EHT TB PPDU or the NEXT TB PPDU in response to the trigger frame, the value of the L_LENGTH parameter which is the value of the length field included in the L-SIG field of the TB PPDU may be configured as a value of adding the preconfigured value (for example, 2 or -1) to the value of the transmission parameter L_LENGTH parameter which is the value indicated by the UL length subfield included in the common information field of the trigger frame.

At this time, the length which is the L_LENGTH value may be calculated by the equation 4 below.

【Equation 4】

$$\text{Length} = \left\lceil \frac{TXTIME - SignalExtension - 20}{4} \right\rceil \times 3 - 3$$

As described above, the case that the UL length subfield value included in the trigger frame mod 3 is 0 may exist. In addition, as described above, the response by using the HE TB PPDU, the EHT TB PPDU, or the NEXT TB PPDU is possible based on the trigger frame.

When the UL length subfield value included in the trigger frame mod 3 is 0, in case that the response is performed by using the HE TB PPDU, it is possible to configure the length field included in the L-SIG field included in the HE TB PPDU as the value of adding the preconfigured value to the UL length subfield value. For example, the preconfigured value may be (-2), and this value may be a value used to obtain, as a result of a mod 3 operation of the length subfield value included in the L-SIG field of the HE TB PPDU, a value other than 0, for example, a value of 1. In another embodiment, the preconfigured value may be 1.

When the UL length subfield value included in the trigger frame mod 3 is 0, in case that the response is performed by using the EHT TB PPDU or the NEXT TB PPDU, it is possible to configure the length field included in the L-SIG field included in the EHT TB PPDU or the NEXT TB PPDU as the same value as the value of the UL length subfield, and this value may be a value used to obtain, as a result of a mod 3 operation of the length field included in the L-SIG field of the EHT TB PPDU or the NEXT TB PPDU, a value of 0.

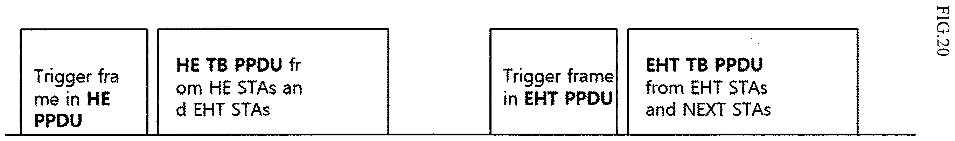

FIG. 20 illustrates an UL MU operation according to another embodiment of the present disclosure.

An embodiment of FIG. 20 may be a method for solving the problem described in FIG. 10 to FIG. 11. In addition, an embodiment of FIG. 20 may describe another method for dividing the trigger frame of the embodiments described in FIG. 15. In addition, the description described above may be omitted.

According to an embodiment of the present disclosure, it is possible to selectively transmit the HE TB PPDU and the EHT TB PPDU by the EHT STA. In addition, it is possible to selectively transmit the HE TB PPDU, the EHT TB PPDU, and the NEXT TB PPDU by the NEXT STA. In this case, there is an advantage to schedule the STAs of the multiple standards by one frame or one PPDU. The STAs of the multiple standards use the common resources together in the wireless LAN, and it may be an advantage. For example, it is possible that the HE STA (HE STA other than EHT) and the EHT STA respond by using the HE TB PPDU through one frame.

In addition, information for selecting the TB PPDU format may be included in the trigger frame, the PPDU including the TRS or the trigger frame, or the PPDU including the TRS.

According to an embodiment of the present disclosure, information about the responding TB PPDU format may exist in the PHY level. According to an embodiment of the present disclosure, the HE trigger frame, the EHT trigger frame, and the NEXT trigger frame may be divided. In addition, the response indicated by the HE trigger frame, the EHT trigger frame, and the NEXT trigger frame may respond by using the HE TB PPDU, the EHT TB PPDU, and the NEXT TB PPDU, respectively.

In addition, in the present disclosure, the dividing the HE trigger frame, the EHT trigger frame, or the NEXT trigger frame may be the same meaning as the dividing the TB PPDU format to respond to the trigger frame into the HE TB PPDU, the EHT TB PPDU, and the NEXT TB PPDU, respectively.

According to an embodiment of the present disclosure, the TB PPDU format responding to the trigger frame may be determined based on the PPDU format including the trigger frame. For example, it is possible to respond to the frame by the TB PPDU of the standard which is the same as the PPDU format including the trigger frame. Referring to the FIG. 19, when the trigger frame is transmitted through the HE PPDU, the TB PPDU responding to the trigger frame may be the HE TB PPDU. In this case, when the trigger frame indicates the EHT STA and the NEXT STA, the response may be performed by using the HE TB PPDU. When the trigger frame is transmitted through the EHT PPDU, the TB PPDU responding to the trigger frame may be the EHT TB PPDU. In this case, when the trigger frame indicates the NEXT STA, the response may be performed by using the EHT TB PPDU.

In addition, when responding to the trigger frame included in the EHT PPDU or the NEXT PPDU, the PHY version identifier included in the U-SIG field of the TB PPDU responding to the EHT PPDU or the NEXT PPDU may be configured as the same value as the PHY version identifier included in the U-SIG field of the EHT PPDU or the NEXT PPDU. In addition, the PHY version identifier included in the U-SIG field of the EHT PPDU or the NEXT PPDU is an RXVECTOR which is a receiving parameter and may be transmitted to the MAC from the PHY of the STA receiving the EHT PPDU or the NEXT PPDU. In addition, the PHY version identifier included in the U-SIG field of the TB PPDU responding to the EHT PPDU or the NEXT PPDU is a TXVECTOR and may be transmitted to the PHY from the MAC of the STA transmitting the TB PPDU. That is, the TXVEXTOR PHY version identifier of the STA responding to the TB PPDU may be configured as the value of an RXVECTOR PHY version identifier when receiving the PPDU including the trigger frame indicating the TB PPDU.

According to an embodiment, it is possible to use the MAC level discrimination method described in FIG. 15 together with the PHY level discrimination method described in FIG. 20. For example, when the trigger frame is transmitted to the non-HT (duplicate) PPDU, the MAC level discrimination method may be used. In addition, when the results of the MAC level discrimination method and the PHY level discrimination method (standard for the trigger frame or standard used for responding by the TB PPDU) are not identical to each other, a preconfigured priority may be used.

For example, when the results of the MAC level discrimination method and the PHY level discrimination method do not match, the discrimination method of the PHY level may be used. For example, when the EHT trigger frame is transmitted through the HE PPDU, the response can be performed by using the HE TB PPDU. Therefore, there is an advantage that the HE STA which does not decode the later standard and the PPDU of the later standard may decode the PPDU and may confirm the preamble, and the PPDU or the frame may be properly protected by receiving the frame included in the PPDU.

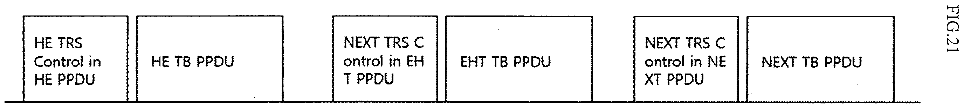

FIG. 21 illustrates an UL MU operation according to another embodiment of the present disclosure.

As described above, the TB PPDU may be indicated through the TRS as well as the trigger frame. In addition, the TRS may be included in the HT control field as described above. For example, it is possible that the HT control field includes the TRS when including an A-control field. It is possible that the TRS is transmitted by the TRS control subfield. The A-control field may be a type in which the control list fields are continuously connected. In addition, the control list field may include the TRS.

In addition, the receiver of the frame including the TRS (intended receiver) can respond to the TRS. For example, the STA corresponding to the RA included in the frame including the TRS can respond to the TRS. The TRS may include information about the length of the frame or the PPDU responding to the TRS (UL Data systems), the location and the size of RU used when responding to the TRS (RU Allocation), information about the power when responding to the TRS (AP Tx Power and UL Target RSSI), and information about a modulation method when responding to the TRS (UL HE-MCS).

An embodiment of FIG. 21 may be a method for solving the problem illustrated in FIG. 10 to FIG. 11. In addition, as described above, the embodiment for the trigger frame may be applied to the TRS. In addition, the contents described above may be omitted.

According to an embodiment of the present disclosure, it is possible that the TRS (each of EHT TRS and NEXT TRS) defined in the EHT standard or the NEXT standard exists in addition to the TRS (HE TRS) defined in the HE standard. Therefore, the TB PPDU responding to the TRS may be the HE TB PPDU, the EHT TB PPDU, or the NEXT TB PPDU according to whether the indicated TRS is the HE TRS, the EHT TRS, or the NEXT TRS. For example, it is possible to determine which standard defines the TRS through the control ID subfield of an A-control subfield. In the additional embodiment, the TRS may be divided into two TRSs, other than the HE TRS and the HE TRS.

Otherwise, which standard defines the TRS may be determined according to whether the HT control field is the HE variant, the EHT variant, or the NEXT variant. In addition, whether the HT control field is the HE variant, the EHT variant, or the NEXT variant may be determined according to the value of the preconfigured bit of the HT control field. For example, the case that B0, B1 of the HT control field is 1, 1 may be the HE variant. In addition, whether the HT control field is the HE variant, the EHT variant or the NEXT variant may be determined by using the additional bit (for example, B31) with B0, B1 of the HT control field.

According to an embodiment of the present disclosure, similarly to the trigger frame described in FIG. 20, it is possible to determine the TB PPDU format responding to the TRS based on the PPDU format including the TRS. That is, when the PPDU indicating the transmission of the PPDU includes the TRS control subfield, the format of the PPDU may be determined based on the format of the PPDU including the TRS control subfield. For example, when the format of the PPDU including the TRS control subfield is the HE PPDU, the format of the indicated PPDU may be the HE PPDU. However, when the format of the PPDU including the TRS control subfield is the EHT PPDU, the format of the indicated PPDU may be the EHT PPDU.

Referring to FIG. 21, when the TRS is transmitted through the HE PPDU, the TB PPDU responding to the TRS may be the HE TB PPDU. In addition, when the TRS is transmitted through the EHT PPDU, the TB PPDU responding to the TRS may be the EHT TB PPDU. In addition, when the TRS is transmitted through the NEXT PPDU, the TB PPDU responding to the TRS may be the NEXT TB PPDU.

According to an embodiment of the present disclosure, the subfield interpretation included in the TRS may vary based on the PPDU format including the TRS. For example, when the TRS is included in the HE PPDU, the UL HE-MCS subfield (or subfield regarding the MCS) included in the TRS may indicate the value corresponding to the HE MCS table. When the TRS is included in the EHT PPDU, the UL HE-MCS subfield (or the subfield regarding the MCS) included in the TRS may indicate the value corresponding to the EHT MCS table. When the TRS is included in the NEXT PPDU, the UL HE-MCS subfield (or subfield regarding the MCS) included in the TRS may indicate the value corresponding to the NEXT MCS table. In addition, the interpretation of the RU allocation subfield may vary based on the PPDU format including the TRS.

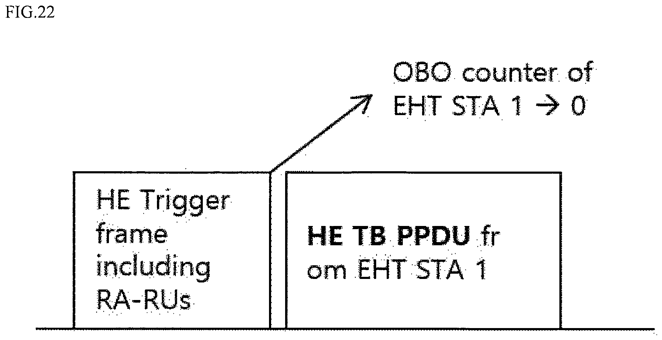

FIG. 22 illustrates an UL orthogonal frequency division multiple access (OFDMA)-based random access (UORA) operation according to an embodiment of the present disclosure.

According to an embodiment, the UORA operation may be an operation responding based on the RA-RU included in the trigger frame. For example, when an OBO counter configured by the STA is reduced based on the number of the RA-RU indicated by the trigger frame and the OBO counter is to be 0, the operation responding to the trigger frame through the RA-RU indicated by the trigger frame may be the UORA.

FIG. 22 may be an operation for solving the problem described in FIG. 10 and FIG. 11, and the contents described above may be omitted.

According to an embodiment of the present disclosure, it is possible that the EHT STA and the NEXT STA as well as the HE STA reduces the OBO counter for the RA-RU indicated by the HE trigger frame or the trigger frame included in the HE PPDU, and performs an UORA response. Therefore, in this case, the response may be performed by using the HE TB PPDU. Similarly, in case that the response to the RA-RU indicated by the trigger frame included in the EHT PPDU or the EHT trigger frame is performed, the response may be performed by using the EHT TB PPDU. In addition, when the response to the RA-RU indicated by the trigger frame included in the NEXT PPDU or the NEXT trigger frame is performed, the response may be performed by using the NEXT TB PPDU.

According to an embodiment of the present disclosure, when the TB PPDU response is performed for the trigger frame including the RA-RU, it is possible to respond through the TB PPDU corresponding to the oldest standard which can understand the trigger frame and the PPDU including the trigger frame.

Referring to FIG. 22, as to the HE trigger frame indicating the RA-RU, when the OBO counter value is 0, the EHT STA may respond by using the HE TB PPDU.

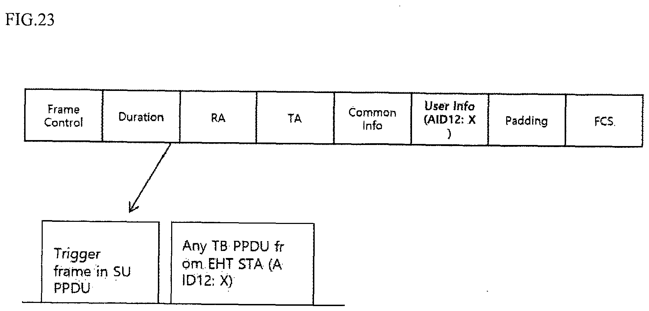

FIG. 23 illustrates an UL MU operation according to another embodiment of the present disclosure.

According to an embodiment of the present disclosure, when the STA is the only STA indicated by any trigger frame or the TRS, it is possible to respond by using any TB PPDU. Otherwise, when the STA is the only STA indicated by the TRS and the trigger frame included in the PPDU including the TRS or any trigger frame, it is possible to respond by using any TB PPDU. That is, in this case, even if the embodiments described in FIG. 13 to FIG. 22 are not applied thereto, the problems as described in FIG. 10 to FIG. 11 may not occur.

According to an embodiment of the present disclosure, whether the STA is the only indicated STA may be determined based on the number of the user information field included in the trigger frame. For example, the STA may be the only STA indicated when it is satisfied that the user information field included in the trigger frame is 1.

In addition, the STA may be the only STA indicated when it is satisfied that the RU received by the STA is the only RU used by the PPDU including the trigger frame or the TRS.

In addition, the STA may be the only STA indicated when it is satisfied that the RA of the frame received by the STA is the individual address indicating the STA.

In addition, the STA may be the only STA indicated when it is satisfied that the PPDU received by the STA is a single user (SU) PPDU.

According to an embodiment, it is possible to determine the only STA indicated when the described conditions above are satisfied together.

According to an embodiment, the PPDU including the trigger frame, the TRS or the PPDU including the trigger frame or the TRS may include information indicating that it does not matter what TB PPDU format the responding TB PPDU format is.

Referring to FIG. 23, the trigger frame included in the SU PPDU may indicate the STA corresponding to the AID12 value X. The trigger frame may include one user information field. In addition, the RU including the trigger frame may be the only RU used by the PPDU including the trigger frame. In this case, the TB PPDU responding to the trigger frame may have no problem even if the TB PPDU is any TB PPDU. For example, when the STA corresponding to the AID12 value X is the EHT STA, as to the trigger frame, the response may be performed by using the HE TB PPDU or may be performed by using the EHT TB PPDU.

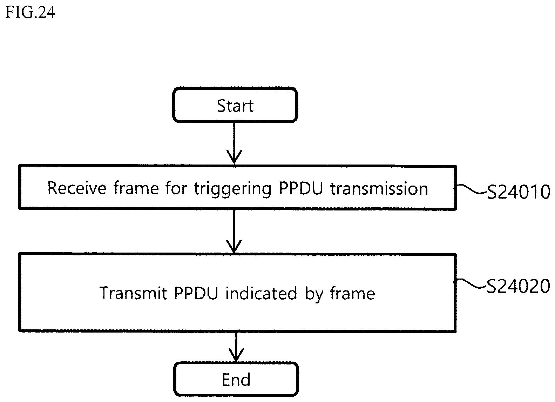

FIG. 24 is a flowchart illustrating an example of a transmission method of a PPDU according to an embodiment of the present disclosure.

Referring to FIG. 24, the non-AP STA receives the frame indicating transmission of the PPDU from the AP and transmits the PPDU based on the received frame.

Specifically, the non-AP STA may receive the frame indicating the transmission of the PPDU from the AP STA (S24010). At this time, the frame indicating the transmission of the PPDU may be the trigger frame or the PPDU.

The frame indicating the transmission of the PPDU may have the format illustrated in FIG. 12 to FIG. 17. For example, the frame may include the common information field and/or the user information field, and additionally, include the TRS control subfield indicating the transmission of the PPDU.

At least one of the common information field and the user information field may be used for identifying whether the PPDU indicated by the trigger frame is an extremely high throughput (EHT) PPDU or a high efficiency (HE) PPDU. Specifically, the common information field may include the first subfield indicating the format of the PPDU transmitted from the primary channel and the user information field may include the second subfield indicating a location of the resource unit (RU) allocated from the terminal.

The first subfield may indicate the transmission of the EHT PPDU or the HE PPDU in the primary channel of 160 MHz band and the second subfield may indicate whether the RU allocated by the user information field is located at the primary channel or the secondary channel.

The non-AP STA may identify the format of the PPDU to which the transmission is indicated by the frame by using at least one among the common information field and/or the user information field included in the frame, and may transmit the PPDU to the PA according to the identified format (S24020).

At this time, the PPDU is the EHT PPDU or the HE PPDU identified by at least one among the common information field and the user information field.

The PPDU may include the length field related to the length of the PPDU, and the length field may be configured to have different values according to whether the PPDU is the EHT PPDU or the HE PPDU as described in FIG. 19.

For example, when the PPDU is the HE PPDU, the length field may be configured to have the same value as the value of the length field included in the frame, and when the PPDU is the EHT PPDU, the length field may be configured to have the value of adding the specific value to the value of the length field included in the frame. At this time, the specific value is 2, and when the value of the length field included in the frame is not the multiple of 3, the value of the length field of the PPDU may be used to be the multiple of 3.

The PPDU includes the PHY version identifier (ID) subfield indicating whether the PHY version is EHT, and the PHY version ID subfield may be configured based on the format identifier subfield included in the frame indicating transmission of the PPDU.

In addition, the frame may not indicate the transmission of the EHT PPDU and the HE PPDU together.

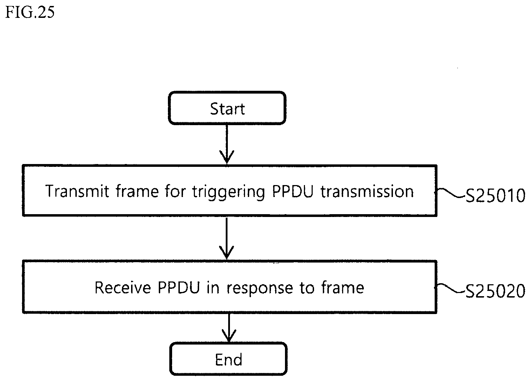

FIG. 25 is a flowchart illustrating an example of a transmission method of a frame for indicating transmission of a PPDU according to an embodiment of the present disclosure.

Specifically, the AP STA may transmit the frame indicating transmission of the PPDU to the non-AP STA (S25010). At this time, the frame indicating the transmission of the PPDU may be the trigger frame or the PPDU.

The frame indicating the transmission of the PPDU may have the format described in FIG. 12 to FIG. 17. For example, the frame may include the common information field and/or the user information field, and additionally include the TRS control subfield for indicating the transmission of the PPDU.

At least one of the common information field and the user information field may be used for identifying whether the PPDU indicated by the trigger frame is an extremely high throughput (EHT) PPDU or a high efficiency (HE) PPDU. Specifically, the common information field may include a first subfield for indicating the format of the PPDU transmitted from the primary channel, and the user information field may include a second subfield indicating a location of the resource unit (RU) allocated to the terminal.

The first subfield may indicate the transmission of the EHT PPDU and the HE PPDU in the primary channel of 160 MHz, and the second subfield may indicate whether the RU allocated by the user information is located at the primary channel or the secondary channel.

The AP STA may receive the PPDU according to the identified format by using at least one among the common information field and/or the user information field included in the frame (S25020).

At this time, the PPDU may be the EHT PPDU or the HE PPDU identified by at least one among the common information field and the user information field.

The PPDU may include the length field related to the length of the PPDU, and the length field may be configured as different values according to whether the PPDU is the EHT PPDU or the HE PPDU as illustrated in FIG. 19.

For example, when the PPDU is the HE PPDU, the length field is configured as the value which is the same as the value of the length field included in the frame, and when the PPDU is the EHT PPDU, the length field may be configured as the value of adding the specific value to the length field included in the frame. At this time, the specific value may be 2, and when the value of the length field included in the frame is not the multiple of 3, the value of the length field of the PPDU may be used to be the multiple of 3.

The PPDU may include the PHY version identifier (ID) subfield indicating whether the PHY version of the PPDU is the EHT, and the PHY version ID subfield may be configured based on the format identifier subfield included in the frame indicating the transmission of the PPDU.

In addition, the frame may not indicate the transmission of the EHT PPDU and the HE PPDU together.

The foregoing descriptions of the present disclosure are for illustration purposes, and those skilled in the art, to which the present disclosure belongs, will be able to understand that modification to other specific forms can be easily achieved without changing the technical spirit or essential features of the present disclosure. Therefore, it should be understood that the embodiments described above are illustrative and are not restrictive in all respects. For example, each element described as a single type may be implemented in a distributed manner, and similarly, elements described as being distributed may also be implemented in a combined form.

The scope of the present disclosure is indicated by claims to be described hereinafter rather than the detailed description, and all changes or modifications derived from the meaning and scope of the claims and their equivalent concepts should be interpreted as being included in the scope of the present disclosure.

**Claims**

1.  A terminal of a wireless communication system, the terminal comprising:

a communication module; and
a processor configured to control the communication module, wherein the processor is configured to,
receive a frame indicating transmission of a physical layer protocol data unit (PPDU) to one or more terminals from an access point (AP),
wherein the frame comprises a common information field and an user information field for each of the one or more terminals, and
wherein at least one of the common information field and the user information field is used for identifying whether the PPDU indicated by a trigger frame is an extremely high throughout (EHT) PPDU or a high efficiency (HE) PPDU, and
transmit the PPDU in response to the frame,
wherein the PPDU is the EHT PPDU or the HE PPDU identified by at least one among the common information field and the user information field.

2. The terminal of claim 1,

wherein the PPDU comprises a length field related to a length of the PPDU, and
wherein the length field is configured to have different values according to whether the PPDU is the EHT PPDU or the HE PPDU.

3. The terminal of claim 2,
wherein, when the PPDU is the HE PPDU, the length field is configured to have the same value as a value of the length field included in the frame.

4. The terminal of claim 2,
wherein, when the PPDU is the EHT PPDU, the length field is configured to have a value of adding a specific value to the value of the length field included in the frame.

5. The terminal of claim 4,
wherein the specific value is 2.

6. The terminal of claim 4,
wherein, when the value of the length field included in the frame is not a multiple of 3, the specific value is used so that the value of the length field of the PPDU is a multiple of 3.

7. The terminal of claim 1,
wherein the PPDU comprises a PHY version identifier (ID) subfield indicating whether a PHY version of the PPDU is the EHT.

8. The terminal of claim 7,

wherein the frame further comprises a format identifier subfield, and
wherein the PHY version ID subfield is configured to have the same value as the format identifier subfield.

9. The terminal of claim 1,
wherein the frame does not indicate transmission of the EHT PPDU and the HE PPDU together.

10. The terminal of claim 1,

wherein the common information field comprises a first subfield indicating a PPDU format transmitted from a primary channel, and
wherein the user information field comprises a second subfield indicating a location of a resource unit (RU) allocated to the terminal.

11. The terminal of claim 10,
wherein whether the PPDU indicated through the frame is the EHT PPDU or the HE PPDU is identified based on the first subfield and the second subfield.

12. The terminal of claim 10,

wherein the first subfield indicates transmission of the EHT PPDU or the HE PPDU in the primary channel of a 160 MHz band, and

wherein the second subfield indicates whether the RU allocated by the user information field is located in the primary channel or the secondary channel.

13. A signaling method of a terminal in a wireless communication system, the method comprising the steps of

receiving a frame indicating transmission of a physical layer protocol data unit (PPDU) to one or more terminals from an access point (AP),

wherein the frame comprises a common information field and an user information field for each of the one or more terminals, and

wherein at least one of the common information field and the user information field is used for identifying whether the PPDU indicated by a trigger frame is an extremely high throughout (EHT) PPDU or a high efficiency (HE) PPDU; and

transmitting the PPDU in response to the frame,

wherein the PPDU is the EHT PPDU or the HE PPDU identified by at least one among the common information field and the user information field.

14. The method of claim 13,

wherein the PPDU comprises a length field related to a length of the PPDU,

the length field is configured to have different values according to whether the PPDU is the EHT PPDU or the HE PPDU.

15. The method of claim 14, wherein, when the PPDU is the HE PPDU, the length field is configured to have the same value as a value of the length field included in the frame.

16. The method of claim 14, wherein, when the PPDU is the EHT PPDU, the length field is configured to have a value of adding a specific value to the value of the length field included in the frame.

17. The method of claim 16, wherein the specific value is 2.

18. The method of claim 16, wherein, when the value of the length field included in the frame is not a multiple of 3, the specific value is used so that the value of the length field of the PPDU is a multiple of 3.

19. The method of claim 13, wherein the PPDU comprises a PHY version identifier (ID) subfield indicating whether a PHY version of the PPDU is the EHT.

20. The method of claim 19,

wherein the frame further comprises a format identifier subfield, and

wherein the PHY version ID subfield is configured to have the same value as the format identifier subfield.

21. The method of claim 13,

wherein the frame does not indicate transmission of the EHT PPDU and the HE PPDU together.

22. The method of claim 13,

wherein the common information field comprises a first subfield indicating a PPDU format transmitted from a primary channel, and

wherein the user information field comprises a second subfield indicating a location of a resource unit (RU) allocated to the terminal.

23. The method of claim 22, wherein whether the PPDU indicated through the frame is the EHT PPDU or the HE PPDU is identified based on the first subfield and the second subfield.

24. The method of claim 22,

wherein the first subfield indicates transmission of the EHT PPDU or the HE PPDU in the primary channel of a 160 MHz band, and

wherein the second subfield indicates whether the RU allocated by the user information field is located in the primary channel or the secondary channel.

FIG.1

FIG.2

FIG.3

FIG.4

<u>200</u>

210

Communication Unit

Processor

Memory

220

260

FIG.5

FIG.6

FIG.7

(a) 11a/g PPDU

L-STF | L-LTF | L-SIG (SVC) | MPDU | TAIL

(b) 11ax HE PPDU

L-STF | L-LTF | L-SIG | RL-SIG | HE-SIG-A | HE-SIG-B | HE-STF | HE-LTF (SVC) | MPDU | TAIL
B B B B/Q
mod3=1,2

(c) 11be EHT PPDU

L-STF | L-LTF | L-SIG | RL-SIG | U-SIG | EHT-SIG-A | EHT-SIG-B | EHT-STF | EHT-LTF (SVC) | MPDU | TAIL
B B B B
mod3=0

(d) L-SIG RL-SIG

Reserved | L_RATE (4b) | L_LENGTH (12b) | Parity | Tail (6b)

(e) U-SIG

PHY VER (3b) | UL/DL (1b) | BSS Color (6b+a) | TXOP (7b+a) | TBD | PPDU Format (2b) | BW (4b) | Format-specific field | CRC (3b) | Tail (6b)

Version independent field | Version dependent field

(f) MU PPDU Format-specific bits

SIGB MCS (4b) | SIGB DCM | # SIGB SYM (4b) | SIGB Compress | # of LTF Sym (4b)

FIG.8

(a) EHT SU PPDU

(b) EHT TB PPDU

(c) EHT MU PPDU

(d) EHT ER SU PPDU

FIG.9

**AP MLD**
**(multi-link device)**

| AP1 | AP2 | AP3 |

Link1      Link2      Link3

**Non-AP MLD**
**(multi-link device)**

| Non-AP STA1 | Non-AP STA2 | Non-AP STA3 |

FIG.10

OFDM PHY STA

HT STA

VHT STA

HE STA

EHT STA

NEXT STA

FIG.11

| AP | Trigger frame |
| --- | --- |
| HE STA | HE TB PPDU |
| EHT STA | EHT TB PPDU |
| EHT STA | HE TB PPDU |

## FIG.12

**(a) Trigger frame format**

| Frame Control | Duration | RA | TA | Common Info | User Info List | Padding | FCS |
|---|---|---|---|---|---|---|---|

Octets: 2, 2, 6, 6, 8 or more, variable, variable, 4

**(b) Common Info field**

| B0 B3 | B4 B15 | B16 | B17 | B18 B19 | B20 B21 | B22 | B23 B25 |
|---|---|---|---|---|---|---|---|
| Trigger Type | UL Length | More TF | CS Required | UL BW | GI And HE-LTF Type | MU-MIMO HE-LTF Mode | Number Of HE-LTF Symbols And Midamble Periodicity |

Bits: 4, 12, 1, 1, 2, 2, 1, 3

| B26 | B27 | B28 B33 | B34 B35 | B36 | B37 B52 | B53 | B54 B62 |
|---|---|---|---|---|---|---|---|
| UL STBC | LDPC Extra Symbol Segment | AP Tx Power | Pre-FEC Padding Factor | PE Disambiguity | UL Spatial Reuse | Doppler | UL HE-SIG-A2 Reserved |

Bits: 1, 1, 6, 2, 1, 16, 1, 9

| B63 | |
|---|---|
| Reserved | Trigger Dependent Common Info |

Bits: 1, variable

**(c) User Info field**

| B0 B11 | B12 B19 | B20 | B21 B24 | B25 | B26 B31 | B32 B38 | B39 | |
|---|---|---|---|---|---|---|---|---|
| AID12 | RU Allocation | UL FEC Coding Type | UL HE-MCS | UL DCM | SS Allocation/ RA-RU Information | UL Target RSSI | Reserved | Trigger Dependent User Info |

Bits: 12, 8, 1, 4, 1, 6, 7, 1, variable

EP 4 188 017 A1

FIG.13

| | |
|---|---|
| AP | Trigger frame soliciting responses from HE STAs | Trigger frame soliciting responses from EHT STAs |
| HE STAs | HE TB PPDU |
| EHT STAs | EHT TB PPDU |

FIG.14

| Trigger frame | HE TB PPDU |
|---|---|
| | EHT TB PPDU |

FIG.15

EP 4 188 017 A1

| AID12 subfield | Description |
|---|---|
| 0 | User Info field allocates one or more contiguous RA-RUs for associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs for unassociated STAs |
| 2046 | Unallocated RU |
| 2047 | Response to the Trigger frame is transmitted in EHT TB PPDU |
| 2048 | Response to the Trigger frame is transmitted in NEXT TB PPDU |
| 2049-4094 | Reserved |
| 4095 | Start of Padding field |

FIG.16

| B0 | B3 | B4 | B15 | B16 | B18 | | | |
|---|---|---|---|---|---|---|---|---|
| Trigger Type | | UL Length | | Format Identifier | | U-SIG Version Independent Contents | U-SIG Version Dependent Contents | ⋮ |
| 4 | | 12 | | 3 | | | | |

Bits:

FIG.17

| B0    B3 | B4  B15 | B16 | B17 | B18 B19 | B20  B21 | B22 | B23          B25 |
|----------|---------|-----|-----|---------|----------|-----|------------------|
| Trigger Type | UL Length | More TF | CS Required | UL BW | GI And HE-LTF Type | MU-MIMO HE-LTF Mode | Number Of EHT-LTF Symbols And Midamble Periodicity |

Bits: 4    12    1    1    2    2    1    3

| B26 | B27 | B28  B33 | B34 B35 | B36 | B37    B52 | B53 | B54 |
|-----|-----|----------|---------|-----|------------|-----|-----|
| UL STBC | LDPC Extra Symbol Segment | AP Tx Power | Pre-FEC Padding Factor | PE Disambiguity | UL Spatial Reuse | Doppler | HE/EHT P160 |

Bits: 1    1    6    2    1    16    1    1

| B55 | B56  B62 | B63 | |
|-----|----------|-----|-----|
| Special User Info Field Present | Reserved | Reserved | Trigger Dependent Common Info |

Bits: 1    7    1    variable

(a) Common Info field format

| B0  B11 | B12  B19 | B20 | B21 B24 | B25 | B26       B31 | B32    B38 | B39 | |
|---------|----------|-----|---------|-----|---------------|------------|-----|-----|
| AID12 | RU Allocation | UL FEC Coding Type | UL EHT-MCS | Reserved | SS Allocation/ RA-RU Information | UL Target Receive Power | PS160 | Trigger Dependent User Info |

Bits: 12    8    1    4    1    6    7    1    variable

(b) User Info field format

| B0  B11 | B12 B14 | B15 B16 | B17  B20 | B21  B24 | B25  B36 | B37  B39 | |
|---------|---------|---------|----------|----------|----------|----------|-----|
| AID12 | PHY Version ID | UL Bandwidth Extension | Spatial Reuse 1 | Spatial Reuse 2 | U-SIG Disregard And Validate | Reserved | Trigger Dependent User Info |

Bits: 12    3    2    4    4    12    3    variable

(c) Special User Info field format

FIG.18

FIG.19

**L_LENGTH in TB PPDU**

**Trigger frame**

UL Length mod 3 != 0
(HE Trigger frame)
→ HE TB PPDU: Set to UL Length value
→ EHT (and NEXT) TB PPDU: Set to UL Length value + 2

UL Length mod 3 == 0
→ HE TB PPDU: Set to UL Length value − 2
→ EHT (and NEXT) TB PPDU: Set to UL Length value

FIG.20

FIG.21

| HE TRS Control in HE PPDU | HE TB PPDU | | NEXT TRS Control in EHT PPDU | EHT TB PPDU | | NEXT TRS Control in NEXT PPDU | NEXT TB PPDU |

FIG.22

OBO counter of
EHT STA 1 → 0

| HE Trigger frame including RA-RUs | HE TB PPDU from EHT STA 1 |

FIG.23

| Frame Control | Duration | RA | TA | Common Info | User Info (AID12: X ) | Padding | FCS |
|---|---|---|---|---|---|---|---|

Trigger frame in SU PPDU

Any TB PPDU from EHT STA (AID12: X)

FIG.24

```
                    ┌─────────────┐
                    │    Start     │
                    └──────┬───────┘
                           │
                           ▼
┌──────────────────────────────────────────┐
│ Receive frame for triggering PPDU transmission │──── S24010
└──────────────────────┬───────────────────┘
                       │
                       ▼
┌──────────────────────────────────────────┐
│                                            │
│       Transmit PPDU indicated by frame     │──── S24020
│                                            │
└──────────────────────┬───────────────────┘
                       │
                       ▼
                ┌─────────────┐
                │     End      │
                └─────────────┘
```

FIG.25

```
                    ┌──────────────┐
                    │    Start     │
                    └──────┬───────┘
                           │
                           ▼
┌──────────────────────────────────────────────────┐
│  Transmit frame for triggering PPDU transmission  │────S25010
└──────────────────────────┬───────────────────────┘
                           │
                           ▼
┌──────────────────────────────────────────────────┐
│        Receive PPDU in response to frame          │────S25020
└──────────────────────────┬───────────────────────┘
                           │
                           ▼
                    ┌──────────────┐
                    │     End      │
                    └──────────────┘
```

## INTERNATIONAL SEARCH REPORT

| International application No. |
| --- |
| **PCT/KR2021/008213** |

### A. CLASSIFICATION OF SUBJECT MATTER

**H04W 72/12**(2009.01)i; **H04W 28/06**(2009.01)i; **H04W 76/15**(2018.01)i; **H04L 27/26**(2006.01)i; **H04L 29/08**(2006.01)i; **H04W 84/12**(2009.01)i

According to International Patent Classification (IPC) or to both national classification and IPC

### B. FIELDS SEARCHED

Minimum documentation searched (classification system followed by classification symbols)

H04W 72/12(2009.01); H04B 1/7156(2011.01); H04L 5/00(2006.01); H04W 80/02(2009.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: EHT PPDU, HE PPDU, 사용자 정보(user info), 공통 정보(common info), 길이 필드(length field)

### C. DOCUMENTS CONSIDERED TO BE RELEVANT

| Category* | Citation of document, with indication, where appropriate, of the relevant passages | Relevant to claim No. |
| --- | --- | --- |
| X | HAN, Jonghun et al. Trigger Frame for Frequency-domain A-PPDU Support. doc.: IEEE 802.11-20/0831 r0. 04 June 2020.<br>See slides 3, 5, 12 and 14. | 1-2,7-8,10,12-14,19-20,22,24 |
| A | | 3-6,9,11,15-18,21,23 |
| A | LIM, Dongguk et al. 11be PPDU format. doc.: IEEE 802.11-20/0019. 12 January 2020.<br>See slides 2-11. | 1-24 |
| A | KR 10-2020-0069302 A (QUALCOMM INCORPORATED) 16 June 2020 (2020-06-16)<br>See paragraph [0056]; and claim 1. | 1-24 |
| A | US 2020-0177319 A1 (CARIOU, Laurent et al.) 04 June 2020 (2020-06-04)<br>See paragraphs [0062]-[0082]; and figures 2A-3. | 1-24 |
| A | WO 2020-019928 A1 (HUAWEI TECHNOLOGIES CO., LTD.) 30 January 2020 (2020-01-30)<br>See claims 1-2. | 1-24 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 October 2021** | **20 October 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/008213**

| Patent document cited in search report | | | Publication date (day/month/year) | Patent family member(s) | | | Publication date (day/month/year) |
|---|---|---|---|---|---|---|---|
| KR | 10-2020-0069302 | A | 16 June 2020 | AU | 2018-348087 | A1 | 26 March 2020 |
| | | | | BR | 112020007141 | A2 | 24 September 2020 |
| | | | | CN | 111201742 | A | 26 May 2020 |
| | | | | CN | 111201742 | B | 25 May 2021 |
| | | | | CN | 111279647 | A | 12 June 2020 |
| | | | | EP | 3695554 | A1 | 19 August 2020 |
| | | | | SG | 11202001958 | A | 29 April 2020 |
| | | | | TW | 201924370 | A | 16 June 2019 |
| | | | | TW | 201924398 | A | 16 June 2019 |
| | | | | US | 10728861 | B2 | 28 July 2020 |
| | | | | US | 10863456 | B2 | 08 December 2020 |
| | | | | US | 2019-0109684 | A1 | 11 April 2019 |
| | | | | US | 2019-0110261 | A1 | 11 April 2019 |
| | | | | US | 2019-0253296 | A1 | 15 August 2019 |
| | | | | WO | 2019-074953 | A1 | 18 April 2019 |
| | | | | WO | 2019-074969 | A1 | 18 April 2019 |
| US | 2020-0177319 | A1 | 04 June 2020 | None | | | |
| WO | 2020-019928 | A1 | 30 January 2020 | CN | 110768757 | A | 07 February 2020 |
| | | | | EP | 3820071 | A1 | 12 May 2021 |
| | | | | KR | 10-2021-0024205 | A | 04 March 2021 |
| | | | | US | 2021-0143966 | A1 | 13 May 2021 |

Form PCT/ISA/210 (patent family annex) (July 2019)